# EUROPÄISCHE PATENTANMELDUNG

(11) **EP 3 669 668 A1**
(43) Veröffentlichungstag der Anmeldung: **24.06.2020**
(21) Anmeldenummer: 18212833.0
(22) Anmeldetag: 17.12.2018
(51) Int. Cl.: A23L 17/30, A23B 4/027

(54) **VERFAHREN ZUR HERSTELLUNG VON KAVIAR ODER EINEM KAVIARÄHNLICHEM PRODUKT AUS REIFEN EIERN VON LEBENDEN WASSERTIEREN UND SOLCHE PRODUKTE**

(71) Anmelder: Alfred-Wegener-Institut Helmholtz-Zentrum für Polar- und Meeresforschung, 27570 Bremerhaven (DE)
(72) Erfinder: Köhler-Günther, Angela, 27570 Bremerhaven (DE)

(57) **Zusammenfassung**

Die Gewinnung von Kaviar (vom lebenden Stör) und kaviarähnlichen Produkten (von anderen lebenden Wassertieren - Fischen, Krustentieren, Mollusken - mit genießbaren Eiern) ist besonders nachhaltig und auch ökonomisch hocheffizient. Im Stand der Technik werden die Eier mit Calciumionen behandelt und bilden metabolisch durch Proteinvernetzung eine mechanisch verfestigte strukturierte Eihülle aus. Bei dem erfindungsgemäßen Verfahren werden die reifen, ovulierten, unbefruchteten Eier, die insbesondere durch einfaches Abstreifen gewonnen werden, in einem Kalium-Expositionsschritt in einer wässrigen Lösung mit Kaliumionen in Kontakt gebracht und bilden elektrisch durch verstetigte Depolarisation eine elastisch verfestigte Eihülle mit einer hyalinen neuen Zone (NZ) aus. Diese verleiht dem Kaviar und kaviarähnlichen Produkten eine besondere Textur und Verhalten bei der Weiterverwendung. Kalium als technischer Hilfsstoff ist dann nicht mehr im Endprodukt enthalten. Eine Behandlung von großen oder empfindlichen Eiern in einem Calcium-Expositionsschritt mit Calciumionen ist zur strukturellen Verfestigung der Eihülle optional möglich. Die mit der Erfindung herstellbaren Produkte sind besonders lange haltbar und können sogar ohne Qualitätsverlust eingefroren werden.

## Beschreibung

Die Erfindung bezieht sich auf ein Verfahren zur Herstellung von Kaviar oder einem kaviarähnlichem Produkt aus unbefruchteten, reifen Eiern von lebenden Wassertieren mittels Behandlung der reifen Eier in zumindest einer wässrigen Lösung, enthaltend Wasser und zumindest eine darin gelöste, eine Veränderung der Eihülle induzierende ionische Komponente, und auf Produkte davon in Form von Kaviar oder einem kaviarähnlichen Produkt.

Die aufbereiteten, unbefruchteten Eier von verschiedenen Wassertieren werden als Delikatesse geschätzt und zunehmend konsumiert. Als "Rogen" werden (laienhaft) die Eier in jedem Reifezustand bezeichnet. Theoretisch kann Rogen von jedem weiblichen Wassertier, dessen Eier nicht giftig sind, verarbeitet werden. Bei "Laich" handelt es sich um reife Eier, die in ein Gewässer abgelegt (abgelaicht) wurden, um befruchtet zu werden. Ovulierte Eier sind befruchtungsfähige reife Eier, die aus den umgebenden Follikelhüllen herausgedrückt, aus den Ovarien in die Leibeshöhle abgegeben wurden und von dort aus abgelaicht (oder für eine Weiterverarbeitung geerntet) werden. Gemäß dem Codex Alimentarius der FAO darf (echter) Kaviar nur aus den Eiern von weiblichen Fischen der verschiedenen Störarten hergestellt werden. Neben den wilden Stören werden mittlerweile auch in Aquakulturanlagen im Süßwasser gezüchtete Störe zur Kaviargewinnung genutzt. Störe laichen bis auf einige wenige Ausnahmen ausschließlich im Süßwasser. Zu den bekanntesten Störarten (*Acipenseridae*) gehören u.a. A. *baerii,* A. *guldenstaedtii, Huso huso* (auch als Beluga-Stör bezeichnet), A. *transmontanus,* A. *ruthenus* und dessen Albino. Zu nennen sind aber auch die Hybride zwischen A. *schrenckii* (weiblich) und A. *dauricus* (männlich) und der mit den Stören eng verwandte amerikanische "Paddlefish" (*Polydon spatula*). Auf dem Markt sind verschiedene Kaviarsorten bekannt, die unter anderem mit Sevruga, Osietra und Beluga bezeichnet werden. Von Albino-Stören wird der weiße Kaviar (auch "goldener Kaviar") gewonnen. Von der Art *A. ruthenus* albino wird vereinzelt in Aquakultanlagen der sogenannte "Zarenkaviar" erzeugt. Hierbei handelt es sich aber nicht um den "echten Zarenkaviar", der vom Albino des *Huso huso* stammt und extrem selten ist.

Derzeit werden von ca. 38 weiteren Fischarten, die nicht zu den Störarten zählen, kaviarähnliche Produkte hergestellt und vermarktet, vergleiche beispielsweise die **Veröffentlichung I** von P. Bronzi et al.: "Present and future sturgeon and caviar production and marketing: A global market overview" (Journal of Applied Ichthyology 2014, 30 SI, 6, 1536-1546). Hierzu zählen Thunfisch, Seehase, Lachs, Forelle, Hering, Dorsch, Karpfen, Maräne und Kapelan, aus deren Rogen kaviarähnliche Produkte (auch als "Kaviarersatz" oder "falscher Kaviar" oder "Deutscher Kaviar" bezeichnet) hergestellt werden. Weiterhin wird beispielsweise auch Rogen von Seeigeln gewonnen. Der Rogen vom Hummer, großen Flusskrebsen und anderen Krustentieren sowie der orangefarbene Rogensack der Jakobsmuschel lassen sich ebenfalls zu kaviarähnlichen Produkten verarbeiten. Auf alle diese genannten (und auch weitere geeignete, aber nicht genannte) Wassertiere beziehen sich das mit der Erfindung beanspruchte Verfahren und die herstellbaren Produkte.

Kaviar und kaviarähnliche Produkte sind wertvolle Lebensmittel. Kaviar ist reich an Eiweiß (25% bis 30%) mit einem hohen Anteil essenzieller Aminosäuren. Mit 16% Fett ist er jedoch kein mageres Lebensmittel. Kaviar enthält die Vitamine D, E, B₁₂ und Niacin, die Mineralstoffe Natrium, Kalium, Magnesium und Calcium sowie die Spurenelemente Phosphor, Fluor, Jod und Zink. Darüber hinaus hat er einen hohen Anteil an wertvollem Cholesterol (HDL). Kaviar und kaviarähnliche Produkte können sowohl als Nahrungsmittel als auch als Substanz in der Kosmetikindustrie oder in anderen Industrien, die mit derartig wertvollen Substanzen arbeiten, eingesetzt werden. Größe und Festigkeit der Eier sind sowohl von der jeweiligen Art des Wassertieres als auch von der Reife und damit vom Zeitpunkt ihrer Ernte stark abhängig. Kaviar und kaviarähnliche Produkte unterscheiden sich also in der Herkunft der verarbeiten Eier der Wassertiere. Soweit nicht ganz explizit auf Kaviar vom Stör eingegangen wird, sollen im Folgenden regelmäßig sowohl Kaviar als auch kaviarähnliche Produkte gemeint und umfasst sein.

Auf dem Markt befinden sich derzeit einige Kaviarprodukte aus reifen und ovulierten Eiern von Stören, bei deren Kennzeichnung der Verbraucher eine Herstellung ohne Tötung der Tiere implizieren sollte. Heutzutage wird aber vornehmlich nach wie vor Kaviar angeboten, bei dem es sich um Rogen handelt, der in unreifem Zustand zusammen mit den Eierstöcken von getöteten weiblichen Fischen entnommen wird. Hierbei handelt es sich um die konventionelle Gewinnungsmethode des Kaviars. Zunächst wurde bei Kaviar von Aquakulturstören davon ausgegangen, dass auch hier - wie früher beim Wildkaviar - die unreifen Eier ohne weitere Behandlung eine ausreichende Festigkeit gegenüber den invasiven Waschschritten zur Entfernung der Reste des Gonadengewebes und für die Umverpackung aufweisen. Die zunehmenden Erfahrungen in der Kaviargewinnung von Stören aus der Aquakultur in den vergangenen 20 Jahren zeigten jedoch, dass dieser unreife Kaviar von getöteten Aquakulturstören eher zu weich ist und nur durch die Verwendung von Borax oder anderen Konservierungsmitteln oder durch Pasteurisierung zu einem für die Umverpackung geeigneten und länger als 2 bis 3 Monate haltbaren Produkt weiterverarbeitet werden kann. Reife ovulierte und abgestreifte Eier, die ohne Tötung der wertvollen Störe geerntet werden, bilden ohne weitere Behandlung bei der Berührung mit normalem Wasser sofort eine klebrige Schicht aus, um in der Natur an Steinen und Gewächsen im Laichgebiet festkleben zu können. Die Berührung der reifen Eier mit normalem Wasser bei der Kaviarproduktion würde daher zu einer unerwünschten Verklebung der Eier führen.

Das Töten von weiblichen Tieren zur Kaviargewinnung bei Wildfängen hat zusammen mit einer drastischen Überfischung, einer Belastung der Gewässer mit industriellen, landwirtschaftlichen und häuslichen Abwässern und einem Wehr- und Dammbau mit der Versperrung der Wanderwege in die Laichgebiete im Süßwasser zu einer massiven Bedrohung der Wildbestände der etwa 27 verschiedenen Störarten geführt. Nach wie vor herrschen in vielen Regionen Wilderei und illegaler Schwarzhandel trotz des Schutzes der Störe durch das Washingtoner Artenschutzabkommen (CITES). Weltweit sind kostenintensive Wiederbesiedlungsprogramme initiiert worden, die aber beispielsweise nach Berichten der World Sturgeon Conservation Society vor allem in China, aber auch im Iran und Russland leider wenig Erfolg zeigen. Lediglich die Maßnahmen zur Konservierung und Wiederbesiedlung der Bestände in den USA und Kanada zeigen erste Erfolge. Neben dem erlaubten Fang von Laichtieren werden verschiedene Störarten auch aus der Aquakultur im Rahmen von Restaurationsprogrammen mit unterschiedlichem Erfolg ins Freiland entlassen, um die vom Aussterben bedrohten Bestände zu retten. In der Aquakultur werden für die Zucht die weiblichen Tiere am Leben gelassen und die Eier durch Abstreifen gewonnen. Dagegen werden für die Kaviarproduktion in Aquakultur bislang in aller Regel die weiblichen Tiere konventionell einfach getötet, weil schonendere Verfahren nicht beherrscht werden. Dabei wird die Tatsache völlig missachtet, dass diese mit zunehmendem Alter eine erheblich verbesserte Reproduktionsleistung zeigen. Auch die speziell in Russland teilweise praktizierte "Kaiserschnitt-Methode" zählt keinesfalls zu den schonenden Methoden, da sie mit einer hohen Sterblichkeit der operierten Fische einhergeht.

### Stand der Technik

Aus der RU 2 232 523 C2 ist eine Methode zur Produktion von granularem Kaviar aus ovuliertem Störrogen bekannt. Hierbei werden die geernteten ovulierten Eier zunächst in einer heißen 1,5-2% wässrigen Lösung eines Konservierungsstoffs behandelt, um sie für eine nachfolgende Pasteurisierung bei Temperaturen von 65-70°C vorzubereiten. Abgesehen von der Tatsache, dass jeder Erhitzungsvorgang den Geschmack des Rogens bedeutsam beeinflusst, ist es bei der Verwendung von ovulierten Eiern, die eine sehr weiche und klebrige Eihülle besitzen, nicht sicher gewährleistet, dass diese die nachfolgenden Behandlungen mit Konservierungsmitteln ohne Platzen überstehen. Aber schon ein geringer Anteil von geplatzten Eiern verschlechtert die Qualität des Kaviars bedeutsam, da die geplatzten Eier nur schwer zu entfernen sind. Die Pasteurisierung führt zu einer Denaturierung der wertvollen Proteine und gibt dem Kaviar einen mehligen Geschmack.

Im Zusammenhang mit der Gewinnung von ovulierten Eier vom Stör ist es beispielsweise aus der **Veröffentlichung II** von M. Szczepkowski et al.: A simple method for collecting sturgeon eggs using a catheter" (Arch. Pol. Fich. (2011) 19:123-128) bekannt, hierfür einen Katheter einzusetzen. Hierdurch können die Eier einfach abfließen oder durch Unterdruck abgesogen werden. Auch ist es bekannt, die Eier aus der Bauchhöhle des Störs einfach herauszumassieren. Diese Methode wird mit "Abstreifen" bezeichnet und ist die schonendste Erntemethode.

Der der Erfindung nächstliegende Stand der Technik wird in der WO 2007/045233 A1 offenbart. Beschrieben wird ein Verfahren zur Herstellung von Kaviar oder einem kaviarähnlichen Produkt aus reifen ovulierten, aber unbefruchteten Eiern von Wassertieren, bevorzugt Fischen, mittels exogener Behandlung der reifen Eier in einer wässrigen Lösung, wobei eine endogene strukturelle Veränderung der Eihülle herbeigeführt wird. Dabei enthält die wässrige Lösung Wasser und zumindest eine ionische Komponente, die im Wasser mit einer vorgegebenen Stoffmengenkonzentration gelöst ist und bei Kontakt mit den Eiern eine endogene strukturelle Veränderung der mehrschichtigen, extrazellulären Eihülle (auch extrazelluläre Matrix, Chorion, Eicortex, Zona Pellucida oder Membran), die das Innere der Eizelle von der Umgebung abtrennt, induziert. Als ionische Komponente wird das Calciumsalz "Calciumchlorid" eingesetzt, das im Wasser zerfällt und Calciumionen freigibt. Calcium ist ein zelleigenes Signaltransduktionsmolekül, das in der Eizelle zur einer Cortikal Reaktion führt und im Eiinneren eine Calciumwelle auslöst, die wiederum zur Aktivierung von Ovoperoxidase (Enzymkette Glucose-6-Phos-phatdehydrogenase, NADPH Oxidase, Ovoperoxidase) führt. Dieses Enzym sorgt für eine irreversible strukturelle Vernetzung von Proteinsträngen durch den Einbau von Tyrosin-Molekülen in die Zona Radiata Interna und die Zona Radiata Externa der extrazellulären Eihülle, was letztendlich zu einer Stabilisierung der Eihülle führt. Eine derartige endogene strukturelle Stabilisierung der Eihaut ist bei unreifen Eiern nicht möglich, da die entsprechenden Rezeptoren und Enzymkaskaden noch nicht herangereift sind. Vor Beginn der Behandlung und vor dem Kontakt mit Wasser werden die Eier in physiologischer Kochsalzlösung gespült, um ein Verkleben zu verhindern und die Verarbeitbarkeit der Eier zu verlängern.

Die beschriebene Reaktionskette wird in der Literatur auch als "zweite Reaktion" bezeichnet. Es handelt sich um eine langsame metabolische Reaktion, die nach der Fusion eines ersten Spermiums mit der Eizelle eine permanente, physikalisch-mechanische Struktur zum Schutz der Eizelle gegen weitere außen am Ei aggregierte Spermien (Polyspermie), vor allem aber gegen Umweltgifte, Mikroben und mechanische Beschädigungen des entstehenden Embryos baut. Bei dem bekannten Verfahren wird die Eihülle von reifen Eiern jedoch durch ein Signaltransduktionsmolekül über eine Enzymkette stabil vernetzt, ohne dass eine Befruchtung durch ein Spermium stattgefunden hätte. Derart stabile reife Eier können dann einer weiteren Behandlung, insbesondere einer leichten Salzung zur Konservierung, unterzogen werden, ohne dabei zu verkleben oder zu platzen. Es ergibt sich ein Kaviar oder ein kaviarähnliches Produkt von höchster Güte wegen seiner Reinheit, hervorragenden Optik, Textur und seinem besten Geschmack. In der Natur dient die vorbeschriebene zweite Reaktionskette dem Schutz des Embryos und benötigt in Abhängigkeit von der Tierart eine Zeitspanne von 10 min bis 20 min oder sogar 60 min. Die natürlich mit Spermien befruchteten Eier sind dann so ausgehärtet, dass sie für den menschlichen Verzehr ungenießbar sind. Auch bei dem bekannten Verfahren werden Zeitspannen in Bereich von 10 min bis 20 min benötigt, um eine für nachfolgenden Behandlungsschritte und Verzehr ausreichend strukturell vernetzte und damit stabilisierte Eihülle zu erreichen. Diese zeigt dann eine unelastische Rigidität, welche beim Verzehr des Produkts für einen "Ploppeffekt" und eine explosive Entlassung des flüssigen Eiinhaltes sorgt. Die Vorliebe für eine spezifische Stärke des Ploppeffekts ist stark vom Einsatz des Kaviars abhängig, beispielsweise in der gehobenen Gastronomie, z.B. in warmen Speisen oder auf Buffets, oder im privaten Bereich, wo der Kaviar häufig pur genossen wird.

Weiterhin ist es aus der EP 2 522 226 B1 bekannt, den Rogen von in Aquakultur aufgezogenen Fischen in einer Zusammensetzung mit dem Flavonoid und Antioxidans Taxifolin (Dihydroquercetin) und weiteren Komponenten zu konservieren. Dabei kann als weitere Komponente neben dem Taxifolin zur Konservierung ein organisches Salz, insbesondere auch Kaliumcitrat, eingesetzt werden. Dabei werden aber bevorzugt 3 bis 5 Gewichtsprozent der Zusammensetzung zugesetzt. Da der Rogen vom getöteten oder per Kaiserschnitt und Eileiterschnitt behandelten Stör genommen wird, werden aber unreife, nicht-ovulierte Eier konserviert. Auch in den Veröffentlichungen SU 1662469 A1 und RU 2 048 111 C1 werden Verfahren zur Konservierung von Fischeiern aufgezeigt, bei denen Kaliumverbindungen eingesetzt werden. Das gattungsgemäße Verfahren beschäftigt sich aber nicht mit der nachgeordneten Konservierung, sondern mit der originären Herstellung von Kaviar und kaviarähnlichen Produkten - völlig unabhängig von einer nachfolgenden Konservierung. Eine Konservierung ist immer nur ein weiterer optionaler Behandlungsschritt. Gleiches gilt auch für die zu der oben genannten RU 2 232 523 C2 korrespondierenden EP 2 868 207 B1**.** Hier wird ein Verfahren zur Konservierung von ovuliertem Störrogen aufgezeigt, bei dem der Rogen zunächst in einer vorgegebenen Schichthöhe auf ein Sieb gegeben und dann mit einer vorgegebenen Expositionszeit in verschiedene, nicht weiter spezifizierte Salzlösungen unterschiedlicher Konzentration getaucht und anschließend wiederum durch Erhitzen pasteurisiert wird. Aus der **Veröffentlichung III** von HUANG Hui et al.: "Effect of Synthetic Preservatives on Volatile Flavor Compounds in Caviar of Sturgeon" (Huso dauricus × A. schrenckii) ([J] FOOD SCIENCE, 2015, 36(12): 97-103) ist es bekannt, Geschmacksverlusten während der kühlen Lagerung von Kaviar vorbeugen zu wollen, indem eine synthetische Konservierung mit dem Konservierungsmittel Kaliumsorbat (E202, Sorbinsäure) und Ascorbat (Vitamin C) durchgeführt wird. Dabei wurde in verschiedenen Testgruppen konstant 0,5 Promille Kaliumsorbat eingesetzt. Es wurden unreife Eier eingesetzt, die durch die konservierende Behandlung einen intensiveren Geschmack erhalten sollen. Kaliumsorbat gilt als schimmel- und gärungshemmend, kann aber den Geschmack eines Produkts auch verschlechtern.

Aus der **Veröffentlichung IV** von Sou-De CHENG et al.: "Abnormal Sea Urchin Fertilization Envelope Assembly in Low Sodium Water" (Biol. Bull. 180: 346-354, June 1991) ist es bekannt, zur Auslösung von Ovoperoxidase in der Fertilisationsmembran zu deren Aushärtung die Eier von Seeigeln mit Seewasser, das Natrium-lonen oder ähnliche Ionen enthält, in Kontakt zu bringen, wobei Seeigel im Meer leben und sich dort auch fortpflanzen. Auch Seewasser mit Kaliumchlorid und geringem Natrium-Ionen-Gehalt wurde getestet. Es wurde aber festgestellt, dass die Substitution von Natrium-Ionen durch Kaliumionen keine strukturelle Aushärtung oder Ovoperoxidase-Sekretion hervorruft. Derartige Erkenntnisse sind aber nicht auf Störe übertragbar, da diese vornehmlich im Süßwasser ablaichen.

Aus der **Veröffentlichung V** von S.K. Roberts et al.: "Cytoplasmic calcium and Fucus egg activation" (Development 120, 155-163, 1994) ist es bekannt, dass die in künstlichem Seewasser (Artificial Sea Water ASW) abgelegten ovulierten Eier von Algen (Braunalge mit Gameten - Eier und Spermien - zur Vermehrung) depolarisiert sind, wenn ein hoher Gehalt von Kaliumionen im ASW ist. Es wird aber kein Stofftransport aus der Eizelle heraus oder eine Calciumwelle beobachtet. Bei Algen handelt es sich jedoch um Pflanzen mit einem gegenüber Tieren völlig anderen Stoffwechsel, so dass hier bereits aus diesem Grund keine Analogien gezogen werden können. Außerdem laichen Störe in Süßwasser und nicht in Salzwasser, wobei Süßwasser eine andere Zusammensetzung aufweist als Salzwasser.

Gemäß der DE 10 2004 030 285 B4 können Eier und Embryonen von Fischen durch Einfrieren im Rahmen einer Vitrifikation konserviert werden. Bei der Vitrifikation werden den biologischen Proben zur Konservierung hohe Konzentrationen an Gefrierschutzsubstanzen zugegeben. Anschließend werden die Proben direkt in Flüssigstickstoff eingebracht. Dieses rasche Einfrieren hat zur Folge, dass in den Proben keine Veränderungen stattfinden können. Ziel ist es, kontinuierliche Ressourcen von Nachkommen für die kommerzielle Aufzucht von Fischen in der Aquakultur oder zur Bewahrung gefährdeter Arten verfügbar zu machen. Voraussetzung für den Gefrierprozess und eine erfolgreiche Revitalisierung ist der Einsatz von teilweise für den Menschen giftigen zellinneren Gefrierschutzmitteln (Methanol - humantoxisch bei 30 ml bis 50 ml pro Mensch und Propandiol) als auch von zelläußerem Gefrierschutz, beispielsweise durch Glukose. Die Gefrierschutzlösungen enthalten unter anderem auch 12 mmol/l KCl, 10 mmol/l CaCl₂ und 5 mmol/l Zitrat. Der Auftauprozess findet innerhalb von 10 s bis 30 s bei hohen Temperaturen zwischen 30°C und 40°C statt. Zur erfolgreichen Revitalisierung zum Erhalt lebensfähiger Eier und Embryonen ist die schrittweise vollständige Entfernung der Gefrierschutzmittel in einer stufenweisen Verringerung erforderlich, da die internen und externen Gefrierschutzmittel in aufgetautem Zustand auf die Eier und Embryonen toxisch wirken können. Bei Fischeiern mit extrem undurchlässiger Zellmembran können diese vor der Inkubation mit der Gefrierschutzlösung mit biologischen Detergentien permeabilisiert werden, um den inneren Gefrierschutz zu ermöglichen. Bevorzugt werden auch befruchtete Eier dem Verfahren unterzogen, die zunächst in Wasser quellen und aushärten.

### Aufgabenstellung

Ausgehend von dem der Erfindung nächstliegenden Stand der Technik gemäß der WO 2007/045233 A1 zur Herstellung von Kaviar und kaviarähnlichen Produkten ist die Aufgabe für die vorliegende Erfindung darin zu sehen, das dort beschriebene Verfahren auf der Basis von unbefruchteten, reifen Eiern von Wassertieren so weiterzubilden, dass insbesondere eine Modifikation der Sensorik in Bezug auf Textur, Geschmack, Transport und Lagerung der reifen Eier erreicht werden kann. Dabei sollen aber die vorbeschriebenen Vorteile der mit dem Verfahren oder anderweitig herstellbaren Produkte, die ebenfalls mit der Erfindung beansprucht werden, erhalten bleiben. Die Lösung für diese Aufgabe ist dem Hauptanspruch zu entnehmen. Vorteilhafte Weiterbildungen der Erfindung werden in den Unteransprüchen und in den Produktansprüchen aufgezeigt und im Folgenden im Zusammenhang mit der Erfindung näher erläutert.

Das beanspruchte Verfahren zur Herstellung von Kaviar oder einem kaviarähnlichen Produkt auf der Basis von reifen Eiern von Wassertieren ist erfindungsgemäß dadurch gekennzeichnet, dass in einem Kalium-Expositionsschritt im Wasser als ionische Komponente Kalium in einer physiologischen Konzentration gelöst ist, wobei das Wasser vor der Zugabe eines Kaliumdonators für die Bildung der ionischen Komponente in technisch erreichbarer Weise entionisiert ist, und die reifen Eier in der wässrigen Lösung für eine vorgegebene Kalium-Expositionszeit zur Veränderung eines elektrischen Polarisationszustandes der Eihülle behandelt werden, wobei die wässrige Lösung eine physiologische Temperatur aufweist, die im natürlichen Lebensbereich des Wassertieres, dessen reife Eier behandelt werden, auftritt, und Temperaturen, die zu einer Atresie oder zu einer Proteindenaturierung der Eier führen, während der gesamten Behandlung vermieden sind.

Durch das Kalium werden die reifen befruchtungsfähigen Eizellen im Rahmen elektrischer Ereignisse aktiviert und die sogenannte "erste Reaktion" hervorgerufen, die in kürzester Zeit (Sekunden- bis Minutenbereich) zur elektrisch induzierten Aufhebung der Klebrigkeit, die sich auf der Hülle reifer, befruchtungsfähiger Eier bei Wasserkontakt durch Bildung einer äußeren Gelschicht (natürlich vorgesehen zum Anheften der Eier an die Umgebung) bildet, und im weiteren Verlauf der Behandlung zur Ausbildung einer neuen, elastischen Zone innerhalb der Eihülle führt. Die neue Schicht verleiht der Eihülle Elastizität und Stabilität, sodass sich erfindungsgemäß bereits zu diesem Zeitpunkt ein Kaviar oder ein kaviarähnliches Produkt höchster Qualität ergibt, der auch weiteren Behandlungsschritten im Rahmen der Erzeugung, insbesondere Malossol-Salzung, Reifung und Umverpackung, ohne Einbußen unterzogen werden kann. Technologisch gesehen können so mit dem erfindungsgemäßen Verfahren in einem Behandlungsbecken von beispielsweise 20 l eine Kaviarmenge in einem Bereich von 2 kg erzeugt werden.

Der technologische Hintergrund zum beanspruchten Verfahren kann durch Zuordnung wissenschaftlicher Erkenntnisse bezüglich der Rolle von Kalium in der Zellphysiologie erhellt werden. Kalium spielt eine zentrale Rolle in allen physiologischen Prozessen im Tier- und Pflanzenreich. Im Blutplasma ist Kalium strikt innerhalb enger Grenzen reguliert. Die strenge Regulierung ist für eine Vielzahl lebenserhaltender physiologischer Prozesse einschließlich des Ruhepotentials und der Weiterleitung von Aktionspotentialen in Nerven, Muskel- und Herzgewebe von entscheidender Bedeutung. Weitere Beispiele sind die neuronale Hormonsteuerung, Zellteilung und die Blutdruck- und Osmoregulation. Repräsentative Konzentrationen von Kalium in mmol/m³ oder mmol pro Liter in den Zellen einiger Modellorganismen sind 30 mmol/l bis 300 mmol/l: in E. coli, 300 mmol/l in sich teilenden Hefezellen, 100 mmol/l in humanen Zellen und nur 4 mmol/l in humanem Blutplasma. Ähnliche Verhältnisse sind für Knochenfische bekannt mit Kaliumkonzentrationen in Zellen und Geweben (Kiemen, Darm, Muskel) zwischen 40 bis 65 mmol/l und 2,5- 5 mmol/l im Blutplasma je nach Spezies.

Auch in Eizellen spielt Kalium eine zentrale natürliche Rolle, vergleiche auch die **Veröffentlichung VI** von E. Tosti et al: "Electrical events during gamete maturation and fertilization in animals and humans" (2004 Human Reproduction Update, Vol. 10, No. pp 53-65). Kalium K⁺ ist dasjenige Ion, welches das Ruhepotenzial der Eizelle entscheidend bestimmt. Dabei werden der Kalium⁺-Gradient und die Durchlässigkeit der Eihülle für Ionen durch Transportproteine und lonenkanäle reguliert. Nach eigenen Untersuchungen liegen in reifen unbefruchteten Eiern des Störes *A. baerii* die intrazellulären Kaliumkonzentrationen bei 50 mmol/l. Extrazelluläres Calcium hingegen beeinflusst das Ruhepotenzial / Fertilisationspotenzial des Eies nicht und ist selbst auch nicht am ersten schnellen elektrischen Block (siehe unten) beteiligt. Die Eihülle markiert die Grenze zwischen dem Inneren der Zelle und der Umgebung. Die lonenzusammensetzung des Inneren der Zelle unterscheidet sich von der lonenzusammensetzung in der äußeren Umgebung. Diese Trennung zwischen Zellinnerem und Außenmedium muss für die metabolische Aktivität und damit das Überleben der Zell aufrechterhalten werden. Die unterschiedliche Verteilung von elektrischen Ladungen innerhalb und außerhalb der Zelle bildet einen elektrischen Gradienten über die Eihülle, der als Potenzialdifferenz (Spannung) beschrieben wird und in Volt messbar ist. Die Potenzialdifferenz über die Eihülle verursacht ein Energiepotenzial in der Form eines lonengradienten und bedingt ein transmembranes Potenzial, das oben bereits erwähnte sogenannte Ruhepotenzial. er Schwerpunkt der aktuellen Forschung zu den Vorgängen der Aktivierung von Gameten, nämlich Sperma und Oozyten, liegt heute in der Entwicklung von Modellen zum besseren Verständnis der Ursachen der humanen Infertilität und in der Entwicklung klinischer Anwendungen zu deren Heilung. Die Ergebnisse, die in die hypothetischen Modelle einfließen, basieren in der Hauptsache auf Studien für marine Wirbellose (Seeanemonen und Seeigel) und einigen wenigen an Amphibien und einigen Säugetierarten (Nagetiere, Rinder, Mensch). Untersuchungen an Fischeiern liegen bislang nicht vor.

Eizellen sind elektrisch erregbar durch lonenkanäle, die in ihrer Eihülle lokalisiert sind. Veränderungen der elektrischen Eigenschaften der Eihülle stellen eine Voraussetzung für eine Eiaktivierung dar. Pionierarbeiten an marinen Wirbellosen demonstrierten Ionenströme von K⁺ durch die Eihülle, welche eine vorübergehende Veränderung des Potenzials über die Eihülle verursachten (Fertilisation Potential FP). Dieses FP wird durch die Aktivierung eines vorübergehenden spannungsabhängigen Einwärtsstroms in das Eiinnere generiert. Es wurde gezeigt, dass die Depolarisation des Eihüllenpotenzials (RP) aus dem Ionenfluss durch die Eihülle als lonenstrom (Fertilisation Current FC) bekannt, herrührt. Der FC fließt durch die Öffnungen großer unspezifischer und hochgradig leitender lonenkanäle in der Eihülle, die durch Sperma oder künstliche chemische oder mechanische Einwirkungen aktiviert werden können. Die bislang hypothetischen Modelle zur Rolle verschiedener lonenkanäle und der relevanten Ionen zeigen artspezifische Unterschiede. Im Gegensatz zu marinen Invertebraten, bei denen ein von außen nach innen, also ein einwärtsgerichteter FC als erstes Ereignis vermutet wird, folgen die elektrischen Ereignisse in einigen Säugetierarten einer initialen Calciumentlassung aus dem Spermium, die wiederum sekundär Kaliumkanäle aktiviert (Calcium-activated potassium channels). Dabei ist die Calcium-Entlassung aus dem Spermium nicht zu verwechseln mit der Calciumwelle im Eiinneren, die zur metabolischen Ovoperoxidase-Aktivierung führt (vergleiche WO 2007/045233 A1).

Eine Eiaktivierung umfasst und durchläuft somit eine ganze Serie von zellbiologischen Kaskaden. Der in der WO 2007/045233 A1 genutzten "zweiten (langsamen) Reaktion" (Slow Block) mit einer Cortikal Reaktion folgt dort die Calcium-abhängige Enzymaktivierung zur Verstärkung und letztlich zum massiven strukturellen Umbau der Eihülle durch irreversibel Tyrosin-vernetzte Proteinstränge in der Zona Radiata Interna und der Zona Radiata Externa In der Natur wird damit die erste Zellteilung für die Embryonalentwicklung vorbereitet. Die bei der vorliegenden Erfindung genutzte "erste (schnelle) Reaktion" (Fast Block, Electrical Block, Fast Electrical Block) mit einer nachfolgenden Depolarisierung / Hyperpolarisierung und deren Verstetigung unterschiedlicher Dauer je nach Tierart steht hingegen am Anfang aller zellbiologischer Kaskaden. Beide Vorgänge unterscheiden sich deutlich aufgrund der eingesetzten Substanzen, nämlich A) Kalium für die schnelle elektrische Blockierung mit Depolarisation der Eihülle und der dadurch ausgelösten Eiaktivierung und B) Calcium für die langsame mechanische Blockierung mit strukturellem Umbau der Eihülle zur Bildung einer festen Fertilisationsmembran.

Das erste elektrische Event ist eine schnelle Depolarisierung oder sogar Hyperpolarisierung innerhalb von Millisekunden und soll in der Natur nach einer Befruchtung die Anhaftung von weiteren Spermien an die Eihülle verhindern. Die schnelle Hyperpolarisierung wird von einer verstetigten Hyperpolarisierung innerhalb der folgenden bis zu 60 min (bei einigen Wassertierarten, wie beispielsweise Hummer, sogar bis zu 5 h) abgelöst. Die in der Eiumgebung verbleibenden Spermien können zwar nach dem Fast Electrical Block noch Anheftungen durchführen und im Vitellinmantel der Eihülle (soft coat) steckenbleiben, können aber nicht durch die Plasmamembran des Eies zur tatsächlichen Befruchtung eindringen, wie an Mollusken gezeigt werden konnte. Bei Fortdauer der Kaliumionen-Exposition gemäß dem mit der Erfindung beanspruchten Verfahren wird beim befruchtungsfähigen, aber unbefruchteten und reifen Ei die Bildung einer bislang in der Literatur unbekannten, völlig neuen, hyalinen (durchscheinenden, glasigen, gelartigen) Zone beobachtet, die GAG-positiv (vermehrtes Auftreten von Glucosaminoglykanen) und eosinophil (mit dem roten, sauren diagnostischen Farbstoff Eosin einfärbbar) zur Visualisierung von Zellorganellen, Plasmaproteine, Bindegewebe und dessen Vorstufen), ist, und in der Spermien steckenbleiben würden. Die Bildung dieser Zone ist innerhalb der verstetigten Hyperpolarisation ab 10 s erstmalig in Teilbereichen über die Eihülle ausgebildet und befindet sich nach Vervollständigung zwischen der Zona Radiata Externa und der Alveolarschicht. Die Ursache für die Ausbildung der hyalinen neuen Zone wird in der verstetigten Depolarisation der Eihülle durch die erfindungsgemäße Zuführung von Kaliumionen in physiologischer Konzentration gesehen.

Der natürliche Kaliumgehalt pflanzlicher Lebensmittel schwankt im Mittel der verschiedenen Lebensmittelgruppen zwischen 0,06 g/kg Trockenmasse (TM) im Zucker und fast 50 g/kg TM im Gemüse. Arm an Kalium sind alle aus Getreide hergestellten Mehle, Nährmittel und Backwaren. Früchte enthalten zwischen < 10 und 25 g Kalium/kg TM. Tomaten sind mit etwa 50 g /kg TM wesentlich kaliumreicher. In Deutschland ist der Kaliumgehalt im Trinkwasser auf 12 mg/l und im Mineralwasser auf 50 mg/l begrenzt. Natrium wird wegen der gesundheitlichen Risiken wegen Bluthochdruckes oft durch Kalium in Speisesalz ersetzt. Nationale Regelungen schreiben vor, dass 1 kg Speisesalz 15-25 mg Jod in Form von Natrium oder Kaliumjodat enthalten muss. Nach EU-Rechtsvorschriften der Mitgliedstaaten über Nahrungsergänzungsmittel dürfen nur die dort angeführten Kaliumverbindungen wie beispielsweise Kaliumbicarbonat (Kaliumhydrogencarbonat, KHCO₃) (CAS-Nr. 298-14-6), Kaliumcarbonat (K₂CO₃) (CAS-Nr. 584-08-7), Kaliumcitrat (CAS-Nr.6100-05-6), Kaliumhydroxid (KOH) (CAS Nr. 1310-58-3), Kaliumchlorid (KCl) (CAS-Nr. 7447-40-7), K, Kaliumjodid (KI) (CAS-Nr. 7681-11-0), Kaliumjodat (KIO3) (CAS-Nr. 7758-05-6), zu Ernährungszwecken verwendet werden. Ebenso dürfen diese Verbindungen nach dem Vorschlag für eine Verordnung des Europäischen Parlaments und des Rates vom 10.11.2003 (KOM (2003) 671 endgültig) Lebensmitteln zugesetzt werden. Bestimmte Kaliumverbindungen, wie beispielsweise Kaliumcitrat (E 332), Kaliumlactat (E 326), Kaliumorthophosphate (E 340), dürfen ebenfalls Lebensmitteln zu technologischen Zwecken zugesetzt werden.

Mit dem erfindungsgemäßen Verfahren zur Behandlung von reifen Eiern mit Kaliumionen können Kaviar oder kaviarähnliche Produkte erzeugt werden, die allen nationalen und internationalen Qualitätsanforderungen durch Behörden, Vertreiber und Verbraucher genügen. Die Untersuchungen der intrazellulären lonenkonzentrationen mit der optischen Emissionsspektroskopie (OES) im Zytoplasma der Eier am Alfred-Wegener-Institut, bei welchen Kalium als neue Substanz zur Depolarisation der äußeren Eihülle eingesetzt wurde, zeigen keine Konzentrationsänderungen auch bei unterschiedlichen eingesetzten Konzentrationen und Dauer der Behandlungszeit. Damit gelten sie eindeutig als technische Hilfsstoffe und sind bei dem Produkt Kaviar nicht deklarationspflichtig.

Bei dem mit der Erfindung beanspruchten Verfahren werden reife Eier eingesetzt, die nach der Ovulation auf natürliche Weise gewonnen werden können, ohne den Fisch oder das Wassertier zu schädigen. Der Kaviar zeigt eine neue Textur mit einer vorteilhaften stabilisierenden Elastizität durch eine hyaline, azelluläre Zone, die bei Zimmertemperatur noch weicher wird, ohne die Stabilität des Kaviars einzuschränken. Der Geschmack ist angenehm frisch und würzig, ohne "fischig" zu sein. Durch die Reinheit der verwendeten Eier ergibt sich bereits ohne die Zugabe von Konservierungsstoffen, beispielsweise das in vielen Nationen bereits verbotene Borax, eine lange Haltbarkeit (9 bis 12 Monate) bei Standardtemperaturen zwischen -2°C und -4°C. Die mit dem beanspruchten Verfahren behandelten Eier sind zudem erstmals ohne Qualitätsverlust einfrierbar, wodurch sich enorme Vorteile bezüglich Lagerung und Transport ergeben.

Wesentlich für die Erfindung ist die Behandlung der reifen Eier mit Kaliumionen in niedrigen physiologischen Konzentrationen im Gegensatz zu der quantum-satis-Anwendung (keine numerische Angabe einer Höchstmenge; die Stoffe sind jedoch gemäß der guten Herstellungspraxis nur in der Menge zu verwenden, die erforderlich ist, um die gewünschte Wirkung zu erzielen, und unter der Voraussetzung, dass die Verbraucher nicht irregeführt werden) von Kalium als Zusatzstoff und technischem Hilfsstoff in der Lebensmittelindustrie (siehe oben). Dabei soll durch die Formulierung "Kalium in physiologischer Konzentration" zum Ausdruck gebracht werden, dass dem Wasser Kalium nur in einer solchen Konzentration zugeführt wird wie sie im natürlichen Prozess im Ei selbst vorhanden hin. Konzentrationen für die Konservierung sind bedeutsam höher und zerstören die natürliche Physiologie des Eies. Kalium ist bereits natürlich in der Eizelle (in einem Bereich von 50 mmol/l) vorhanden und ein wesentlicher Bestandteil ihres Ionenhaushaltes. Da bei der Erfindung die Kaliumionen in niedrigen physiologischen Konzentrationen in der wässrigen Lösung angewendet werden und nicht im Kaviar verbleiben, gelten sie als technische Hilfsstoffe und sind damit nicht kennzeichnungspflichtig. Technische Hilfsstoffe kommen bei der industriellen Verarbeitung und Herstellung von Lebensmitteln zum Einsatz. Bei den technischen Hilfsstoffen handelt es sich um Lebensmittelzusätze, die zugegeben werden, um technische Prozesse, wie beispielsweise das Schneiden und Filtrieren, zu erleichtern. Im Endprodukt dürfen die technischen Hilfsstoffe jedoch gar nicht oder nur in unvermeidbaren (geringen) Rückständen vorhanden sein. Im Gegensatz zu Lebensmittelzusatzstoffen, die auch auf der Verpackung deklariert werden müssen, dürfen die technischen Hilfsstoffe keine Wirkung mehr im Endprodukt haben, was von besonderem Vorteil ist. Ihr Einsatz muss technisch unvermeidbar, technologisch unwirksam, gesundheitlich unbedenklich sowie geruchlich und geschmacklich unbedenklich sein. Da die Stoffe in den behandelten Lebensmitteln nicht mehr vorhanden oder wirksam sind, muss ihr Einsatz nicht gekennzeichnet werden. Dies gilt auch für Rückstände, Reaktionsprodukte oder Restgehalte.

Besonders bevorzugt und vorteilhaft ist es, wenn als Kaliumdonator (Kaliumlieferant) für die Bildung der ionischen Komponente zumindest ein Kaliumsalz, bevorzugt das Salz der Zitronensäure (Kaliumcitrat E332) und/oder das Salz der Salzsäure (Kaliumchlorid E508) und/oder das Salz der Sorbinsäure (Kaliumsorbat E202), eingesetzt ist. Dabei sind diese Salze alle als Lebensmittelzusatzstoffe mit E-Nummern zugelassen. Bei E332 und E508 werden keine Höchstmengenbeschränkungen gefordert, bei E202 ist eine Höchstmengenbeschränkung auf 25 mg/ kg zu konservierender Substanz einzuhalten. Bei einer zu hohen Beigabe von Kaliumsorbat kann es daneben noch zu einer unerwünschten Geschmacksbeeinträchtigung kommen, sodass insbesondere Kaliumcitrat vorzuziehen ist. Eine besonders vorteilhafte und bevorzugte Stoffmengenkonzentration in der einen wässrigen Lösung mit zuvor entionisierten Wasser bei Einsatz eines Kaliumsalzes beträgt gemäß einer nächsten Verfahrensmodifikation zwischen 0,1 mmol/l und 3,0 mmol/l einschließlich der Randwerte, bevorzugt 0,1 mmol/l, 0,5 mmol/l, 0,65 mmol/l, 1,6 mmol/l oder 2,0 mmol/l, besonders bevorzugt 1,0 mmol/l oder 1,5 mmol/l. Aber auch andere Stoffmengenkonzentrationen (ganzzahlig oder Zwischenwerte) in dem genannten Bereich sind ohne weiteres wählbar. Um mit den genannten Stoffmengenkonzentrationen die gewünschten lonenkonzentrationen in der wässrigen Lösung herstellen zu können, muss das für die wässrige Lösung eingesetzte Wasser entionisiert sein. Dabei kann aber nur ein mit technischen Mitteln umsetzbarer Grad der Entionisierung erreicht werden. Dieser kann nicht bei null liegen, da im Wasser ständig Wassermoleküle zerfallen. Angaben zur erreichbaren elektrischen Leitfähigkeit im Wasser als Maß für die Entionisierung sind weiter unten zu finden.

Weiterhin liegt bevorzugt und vorteilhaft die Kalium-Expositionszeit für den Kalium-Expositionsschritt, also für die Behandlung der reifen Eier mit Kaliumionen, in Abhängigkeit von dem Wassertier, dessen reife Eier behandelt werden, zwischen 2 min und 30 min einschließlich der Rand- und Zwischenwerte, bevorzugt bei 5 min, 12 min, 15 min, 20 min oder 25 min, liegt. Aber auch andere Kalium-Expositionszeiten (ganzzahlig oder Zwischenwerte) in dem genannten Bereich sind ohne weiteres wählbar. Bei der Behandlung von reifen Eiern des Hummers (Krustentier) kann es sogar zur Expositionszeiten bis 50 min und mehr kommen, wobei die Eier dann in der Regel nicht mehr weiterverarbeitbar sind. Die Ausbildung der neuen hyalinen Zone beginnt bereits nach wenigen Sekunden nach Inkontaktbringung der reifen Eier mit der wässrigen Lösung mit den Kaliumionen. Da die Eier aber nicht alle simultan mit einer Depolarisation und Bildung einer neuen hyalinen Zone, die die Eihülle abdichtet, reagieren, empfiehlt sich eine ausgedehnte Behandlungszeit bis zu 10 min zur Erreichung einer verstetigten Depolarisierung in allen Eiern. Bereits aber nach 10 s startet in einzelnen Eiern die Ausbildung der neuen hyalinen Zone auf der Oberfläche der Eihülle in einzelnen Teilbereichen. Mit zunehmender Behandlungszeit wandert sie nach außen und ist schließlich (nach einer Behandlungsdauer von mindestens 10 min) zwischen der Zona Radiata Externa und der Alveolarschicht rund um das Ei lokalisiert. Dadurch werden die reifen Eier in der Weise elastisch stabilisiert, dass sie problemlos gesalzen, gereift und umverpackt werden können.

Als weitere Modifikation ist bei dem mit der Erfindung beanspruchten Verfahren optional ein Calcium-Expositionsschritt vorgesehen, der nach der Durchführung des Kalium-Expositionsschrittes oder diesem vorausgehend vorgenommen werden kann. Die bewirkten Veränderungen an der Eihülle (Depolarisation durch Kalium, Strukturveränderung durch Kalzium) treten in beiden Reihenfolgen unabhängig voneinander in gleicher Weise auf. Bevorzugt und vorteilhaft ist im Calcium-Expositionsschritt in einer anderen wässrigen Lösung als ionische Komponente Calcium in einer physiologischen Konzentration gelöst, wobei das Wasser vor der Zugabe eines Calciumdonators zur Bildung der ionischen Komponente in technisch erreichbarer Weise entionisiert ist. Dabei handelt es sich um eine andere wässrige Lösung als bei dem Kalium-Expositionsschritt. Zu Erreichung der weitestgehenden Entionisation des Wassers wird vor Beginn der Calcium-Behandlung neues Wasser verwendet, dem keine Kaliumionen zugesetzt worden sind. Im Calcium-Expositionsschritt wird vorteilhaft und bevorzugt als Calciumdonator (Calciumlieferant) zumindest ein Calciumsalz, bevorzugt Calciumcitrat, Calciumchlorid und/oder Calciumsorbat, eingesetzt. Calciumsalze sind in der europäischen Union als Lebensmittelzusatzstoffe unter den Nummern E333 und E509 ohne Höchstmengenbeschränkung und E203 mit einer Höchstmengenbeschränkung zugelassen.

Calcium ist bereits physiologisch in der Eizelle vorhanden und ein wesentlicher Bestandteil im Zellmetabolismus. Aus der oben bereits gewürdigten WO 2007/045233 A1 ist es bekannt, Calciumchlorid einzusetzen und damit eine strukturelle Verfestigung der Eihülle durch irreversiblen Einbau von Tyrosin-Molekülen zu erreichen. Zusätzlich zu der mit der Erfindung grundsätzlich erreichten Elastizität der Eihülle wird diese nun auch zusätzlich strukturell mechanisch verfestigt. Somit kann eine optimale, stabilisierende Kombination für bestimmte Kaviarsorten und Kaviarersatz erreicht werden. Dies ist insbesondere von Vorteil bei sehr großen instabilen Eiern (größer 3,2 mm im Durchmesser, beispielsweise Eier vom Beluga-Stör oder dem weißen Stör) oder bei solchen, die im reifen Zustand ganz besonders weich sind (maximale Kraft kleiner oder gleich 0,3 N bis zum Zerplatzen im Härtetest, beispielsweise Eier vom Sterlet-Stör), und die neben der elastischen Stabilisierung durch Ausbildung einer neuen hyalinen Zone zusätzlich noch eine unelastische, strukturelle Stabilisierung durch Vernetzung der Eihülle durch Einbau von Tyrosinmolekülen benötigen.

Dabei ergibt sich das Ergebnis eines perfekten Kaviars oder kaviarähnlichen Produkts unabhängig von der zeitlichen Reihenfolge der beiden Expositionsschritte. Basierend auf der vorliegenden Erfindung ist die Calciumionen-Behandlung ein optionaler Expositionsschritt, der bei besonders großen oder empfindlichen Eiern durchgeführt werden kann und zu einer festigenden Aushärtung der Eihülle führt. Dabei kann die Behandlung mit Calciumionen (Calcium-Expositionsschritt) sowohl nach der Behandlung der reifen Eier mit Kaliumionen (Kalium-Expositionsschritt) als auch davor erfolgen. Zur besseren Unterscheidbarkeit des Einsatzes der beiden lonenarten wurden die Rechtschreibformen "Kalium" und "Calcium" (nicht Kalzium) gewählt.

Vorteilhaft und bevorzugt beträgt die Stoffmengenkonzentration des Calciumsalzes in der anderen wässrigen Lösung zwischen 0,1 mmol/l und 3,0 mmol/l einschließlich der Randwerte, bevorzugt 0,1 mmol/l, 0,5 mmol/l, 0,8 mmol/l, 1,0 mmol/l, 1,5 mmol/l, 1,6 mmol/l oder 2,0 mmol/l. Aber auch andere Stoffmengenkonzentrationen (ganzzahlig oder Zwischenwerte) in dem genannten Bereich sind ohne weiteres wählbar. Dabei liegt bevorzugt die Calcium-Expositionszeit für den Calcium-Expositionsschritt in Abhängigkeit von dem Wassertier, dessen reife Eier behandelt werden, zwischen 9 min und 30 min einschließlich der Rand- und Zwischenwerte, bevorzugt bei 10 min, 12,5 min, 15 min, 16 min, 20 min oder 25 min, liegt. Aber auch andere Calcium-Expositionszeiten (ganzzahlig oder Zwischenwerte) in dem genannten Bereich sind ohne weiteres wählbar. Es gilt dabei, dass die Festigkeit der Eihülle mit zunehmender Calcium-Expositionszeit bis zum Erreichen eines Grenzwertes stetig zunimmt. In der Natur wird bei befruchteten Eiern von Fischen nach ca. 60 min eine extrem ausgehärtete Eihülle erreicht, die nicht mehr zum Verzehr geeignet ist. Beim Hummer dauert die Cortikale Reaktion bis zu 24 h.

Ein wesentlicher Verfahrensparameter bei dem mit der Erfindung beanspruchten Verfahren ist die physiologische Temperatur der wässrigen Lösung, in der die reifen Eier behandelt werden. Dabei zeigt der Begriff "physiologisch" auf, dass durch die gewählte Temperatur der wässrigen Lösung die natürlichen Vorgänge in den lebenden Eiern nicht behindert werden (der Physiologie des Wassertiers folgend, von dem die behandelten reifen Eier stammen). Gleiches gilt im Übrigen auch für die Begriffswahl der "physiologischen (Stoffmengen-)Konzentration". Bei dem vorliegenden Verfahren liegt die physiologische Temperatur immer im Bereich der natürlichen Laichtemperatur. Durch diesen Abgleich der Temperatur der wässrigen Lösung auf die natürliche Umgebung des Wassertieres, dessen Eier mit der Erfindung behandelt werden, ist sicher gewährleistet, dass die bei der Erfindung hervorgerufene elektrische Aktivierung der Eihülle, die - ausgehend von einem Ruhepotenzial - durch die Behandlung elektrisch verändert. d.h. depolarisiert wird, erfolgt. Bei unnatürlichen Laichtemperaturen, beispielsweise bei Wassertieren aus den polaren Regionen oberhalb von 15°C, findet hingegen keine Eiaktivierung statt, die reifen Eier bleiben weich und werden matschig. Sie können nicht weiterverarbeitet werden. Analoges gilt für die Eier von Wassertieren aus den gemäßigten und tropischen Zonen. Grundsätzlich gilt, dass bei Temperaturen der wässrigen Lösung oberhalb von 35°C die Eier durch Degeneration starke Qualitätsverluste erfahren. Hierbei handelt es sich dann nicht mehr um die Anwendung physiologischer Verfahrenstemperaturen.

Zur Anpassung der Verfahrenstemperatur werden bei der vorliegenden Erfindung die Lebensbereiche der Wassertiere (Fische, Krustentiere, Mollusken) grob in drei Klimazonen unterteilt: polare Zonen (an den Polen), gemäßigte Zonen (zwischen den polaren Zonen und der tropischen Zone), tropische Zone (um den Äquator). Bei der vorliegenden Erfindung wird bevorzugt und vorteilhaft umgesetzt, dass die physiologische Temperatur der einen wässrigen Lösung (Kalium-Exposition) und/oder der anderen wässrigen Lösung (Calcium-Exposition) einem polaren Temperaturbereich während der natürlichen Fortpflanzung zwischen 1°C und 15°C, bevorzugt zwischen 5°C und 12°C, besonders bevorzugt 10°C, einem gemäßigten Temperaturbereich zwischen 10 und 20°C, bevorzugt 15°C, besonders bevorzugt 12 °C, oder einem tropischen Temperaturbereich zwischen 20°C und 29°C, bevorzugt 27°C, besonders bevorzugt 21°C, einschließlich Rand- und Zwischenwerte, entnommen ist. Temperaturen, die zu einer Veränderung - Degenerierung - der Eier führen, wie es beispielsweise beim Pasteurisieren durch Erhitzen auf Temperaturen oberhalb von 40°C der Fall ist, werden bei der Erfindung jedoch zu jedem Verfahrenszeitpunkt vermieden. Eine Degenerierung der Eier und damit ihre qualitative Verschlechterung treten nicht auf. Des Weiteren findet bei Temperaturen, die unnatürlichen Fortpflanzungstemperaturen entsprechen, keine bei der Erfindung erforderliche Eiaktivierung statt, da die Embryonalentwicklung gestört wird und die reifen Eier weich bleiben und matschig werden. Reife Eier von Wassertieren aus den polaren Zonen beispielsweise degenerieren bereits bei Temperaturen oberhalb von 15°C und werden atretisch, d.h. sie fallen zusammen.

Da bei dem Verfahren nach der Erfindung die Stoffmengenkonzentration von Ionen tierspezifische physiologische Reaktionen elektrischer (Kalium-Exposition) und metabolischer (Calcium-Exposition) Natur auslöst und damit die Verarbeitung zu einem stabilen verzehrfähigen Endprodukt beeinflusst, muss immer als Lösungsmedium von entionisiertem Wasser ausgegangen werden, dem eine exakte Konzentration von elektrisch (Kalium) oder metabolisch (Calcium) aktiven Ionen zugefügt wird. Technisch erreichbar und damit bevorzugt und vorteilhaft ist es deshalb, wenn das in technischer Weise erreichbare entionisierte Wasser eine elektrische Leitfähigkeit zwischen 1 µS/cm und 15 µS/cm einschließlich der Randwerte, bevorzugt 10 µS/cm oder darunter, besonders bevorzugt 5 µS/cm, aufweist. Trink- und Brunnenwasser besteht je nach regionaler Quelle aus einer stark unterschiedlichen Zusammensetzung von verschiedenen Ionen, die unter Umständen sogar antagonistische Wirkungen auf den Zellmetabolismus haben können. Bei einer Temperatur von 25°C beträgt die elektrische Leitfähigkeit beispielsweise von reinstem Wasser 0,055 µS/cm, entionisiertem Wasser 1 µS/cm, Regenwasser 50 µS/cm oder von Trinkwasser 500 µS/cm. Um reproduzierbare Ergebnisse bei dem beanspruchten Verfahren erhalten zu können, ist es wichtig, das entionisierte Wasser in seiner elektrischen Leitfähigkeit zu kennen. Dabei kann es nicht verhindert werden, dass sich ein minimaler Anteil von Ionen auch im entionisierten Wasser befindet, da ein Wert von 0 µS/cm technisch nicht erreichbar ist aufgrund des ständigen lonenzerfalls von H₂O. Bei den genannten Leitfähigkeiten im pS/cm-Bereich soll im vorliegenden Zusammenhang von "in technischer Weise erreichbarem entionisiertem Wasser" gesprochen werden.

Da mit dem mit der Erfindung beanspruchten Verfahren lebende Zellen in Form von aktivierbaren reifen Eizellen behandelt werden, ist es unter anderem auch wichtig, dass die Behandlungsflüssigkeiten dem Metabolismus der Zellen angepasst sind, damit die beim Verfahren induzierten Stoffwechselprozesse auch stattfinden können. Daher ist es von Vorteil und bevorzugt, wenn die eine und/oder die andere wässrige Lösung einen physiologischen pH-Wert zwischen 6,8 und 8,0 einschließlich der Randwerte, bevorzugt zwischen 7,0 und 7,9, besonders bevorzugt 7,2 oder 7,4 oder 7,5, aufweist. Aber auch andere pH-Werte (ganzzahlig oder Zwischenwerte) in dem genannten Bereich sind ohne weiteres wählbar. Insbesondere ist der in der wässrigen Lösung eingestellte pH-Wert relevant für die langsame metabolische Reaktion bei der optionalen Doppelbehandlung mit beiden Expositionsschritten (Behandlung im Kalium-Expositionsschritt mit Kaliumionen und im Calcium-Expositionsschritt mit Calciumionen). Da enzymatische Prozesse (Behandlung mit Calcium im Calcium-Expositionsschritt) in der Zelle stark vom pH-Wert reguliert werden, wurde auch der intrazelluläre pH-Wert im Kalium-Expositionsschritt (Behandlung mit Kalium, kein enzymatischer, sondern ein elektrischer Prozess) untersucht. Der pH-Wert im Zytoplasma der mit den verschiedenen kaliumhaltigen Substanzen in verschiedenen Konzentrationen und unterschiedlicher Dauer behandelten Eier bleibt aber im Wesentlichen unverändert im pH-Wert-Optimum zwischen 7 und 8 und zeigt die erwarteten individuellen Unterschiede bei einzelnen Fischen.

Bei der Erfindung dienen der Expositionsschritt nur mit Kaliumionen und der optionale, zusätzliche Expositionsschritt mit Calciumionen der endogenen Stabilisierung der reifen Eier. Damit ist der Kaviar oder das kaviarähnliche Produkt bereits fertig für eine weitere Verarbeitung, wie der Salzung und Verpackung. Während der Ovulation werden die reifen, ovulierten Eier aus den Follikelzellen herausgedrückt, sodass keine Gewebereste von Blutgefäßen oder Follikelzellen mehr anhaften, an denen Bakterien oder Pilze siedeln könnten. Deshalb verfügen die zu behandelnden Eier über eine große Reinheit und damit über die besten Voraussetzungen für eine lange Haltbarkeit. Diese wird sicher gewährleistet, wenn anschließend an den oder die Expositionsschritte zur Konservierung und Geschmacksintensivierung eine milde Salzung mit bezogen auf eine Menge Kaviar oder kaviarähnlichem Produkt 3,2 % bis 3,8 % (entsprechend 650 mmol Salz/kg Kaviar), bevorzugt 3,5 %, Salz einschließlich der Rand- und Zwischenwerte, durchgeführt wird, wobei das Salz frei von Kalium- und Calciumdonatoren, wie sie beispielsweise in Rieselhilfen enthalten sind, ist. Dadurch führt die Zugabe von Salz zu keiner weiteren Veränderung der behandelten Eier. Andere Werte (ganzzahlig oder Zwischenwerte) sind ebenfalls ohne weiteres wählbar. Bei echtem Kaviar aus Eiern von Stören wird eine trockene Salzung mit einfachem Kochsalz (Natriumchlorid) durchgeführt, eine nasse Salzung wird oft bei der Verarbeitung vom Rogen anderer Fischarten zu kaviarähnlichen Produkten wie Lachs- und Forellenkaviar durchgeführt. Die beanspruchte Salzung in dem genannten Bereich ist eine ganz leichte Salzung, die auch mit "Malossol" bezeichnet wird und ein eindeutiges Anzeichen für eine hohe Güte ist. Eine Pasteurisierung oder Erhitzung auf eine Temperatur von 60°C und darüber entfällt bei dem mit der Erfindung beanspruchten Kaviar oder kaviarähnlichen Produkt völlig, da diese nicht nötig ist und nur der Qualität des Produktes und dessen Sensorik schaden würde. Durch die Malossol-Salzung erhalten die mit dem beanspruchten Verfahren hergestellten Kaviarprodukte bei einer Lagerung bei -2°C eine Mindesthaltbarkeitsdauer von mindestens 9 bis 12 Monaten.

Eine weitere Verbesserung der Güte des hergestellten Kaviars oder kaviarähnlichen Produkts ergibt sich bei der Erfindung, wenn gemäß einer weiteren Modifikation bevorzugt und vorteilhaft anschließend an die Konservierung und Geschmacksintensivierung eine Lagerung des Kaviars oder des kaviarähnlichen Produkts in luftdicht verschlossenen Glasbehältern über mehrere Monate, bevorzugt ein bis drei Monate, zur Reifung durchgeführt wird, wobei ein Reifungsgrad zeitabhängig festlegbar ist. Durch die Lagerung gewinnt der Kaviar an Geschmackintensität. Dabei erfolgt die Lagerung in Glasbehältern, die dem Kaviar ausreichend Raum zur Reifung bietet, da er nicht gepresst wird (wie bei einer Verpackung in metallischen Stülpdeckeldosen) und so seine geschmackintensiven Öle behält. Der so in Glas verpackte Kaviar nach der Erfindung ist nicht zu verwechseln mit pasteurisiertem Kaviar, der ebenfalls häufig in Glas verpackt wird. Des Weiteren wird bei der Lagerung in umweltfreundlichen Glasbehältern der oft bemängelte metallische Geschmack des konventionell in Metallbehältern verpackten Kaviars vermieden.

Gemäß einer nächsten Verfahrensoption ist es bevorzugt und vorteilhaft, wenn anschließend an die Konservierung und Geschmacksintensivierung (Salzung als einzige Konservierungsmaßnahme) oder die Lagerung und Reifung ein Einfrieren des Kaviars oder des kaviarähnlichen Produkts in einem Temperaturbereich zwischen - 20° und -15°C, bevorzugt bei -18°C, einschließlich der Rand- und Zwischenwerte durchgeführt wird. Idealerweise reift der Kaviar für den menschlichen Genuss bis zum gewünschten Reifegrad des jeweiligen Kunden und wird entweder frisch nach 14 Tage nach Produktion oder nach maximal 3-4 Monate Reifung eingefroren. Der Kaviar wird entweder in 500 g großen Glasgefäßen vor der Umverpackung eingefroren oder nach der Umverpackung für den Endkunden in 30 g, 50 g, 125 g, 250 g oder 500 g (ggfs. bis 1000 g) Gläsern, die sich vakuumieren lassen. Unter konventioneller Schlachtung gewonnener Kaviar kann nicht eingefroren werden. Pasteurisierter oder erhitzter Kaviar kann zwar eingefroren werden, zeigt aber große Güteeinbußen durch die Wärmebehandlung. Durch das Einfrieren des Kaviars nach der Erfindung ist erstmalig eine Kaviarvermarktung möglich, die den heutigen Ansprüchen von Convenience Food entspricht. Die Vermarktung von echtem Kaviar stößt bislang aufgrund der spezifischen, penibel einzuhaltenden Transport- und Lagerungstemperaturen von -2°C bis -4°C an Grenzen, da diese bei den meisten Anbietern nicht vorgehalten werden. Deshalb wird konventionell gewonnener Kaviar mit bedenklichen Konservierungsmitteln, wie beispielsweise Borax, behandelt oder pasteurisiert, um ihn wenigstens über einen Zeitraum von 12 Monaten und länger haltbar machen zu können. Der mit der vorliegenden Erfindung hergestellte Kaviar kann indessen einfach eingefroren und so über einen längeren Zeitraum gelagert und frisch gehalten werden. Versuche haben gezeigt, dass bei +4°C langsam aufgetautem Kaviar keinerlei Geschmacksverluste oder Texturveränderungen festgestellt werden können.

Die bei der Erfindung verwendeten reifen Eier werden aus den Gonaden in die Bauchhöhle des Fisches entlassen und von dort über die Genitalöffnung geerntet. Dabei umgibt die reifen und ovulierten Eier noch eine schleimige Ovulationsflüssigkeit, die bei Berührung mit Wasser geliert. Um die Ovulationsflüssigkeit zu entfernen, ist es erforderlich, die Eier vor Beginn der Behandlung in physiologischer Kochsalzlösung zu spülen. Auch ist es vorteilhaft, wenn bevorzugt nach dem Kalium- und - optional - nach dem Calcium-Expositionsschritt zur Entfernung der jeweiligen ionischen Komponente von den reifen Eiern ein Dippen der ovulierten Eier physiologischer Kochsalzlösung durchgeführt wird. Dadurch wird die erfindungsgemäße Zufuhr von Kaliumionen zu den reifen Eiern zur Depolarisation deren Eihülle unterbrochen und deren damit verbundener Stabilisierungsprozess sofort unterbrochen und der bis dahin erreichte (gewünschte) Stabilisierungsgrad der Eihülle als Endzustand zuverlässig erhalten. Dabei wird in einer Modifikation der Erfindung bei beiden Expositionsschritten bevorzugt eine Spülung oder Waschung der reifen Eier mit 0,6 prozentiger bis 1,0 prozentiger, bevorzugt 0,9 prozentiger, physiologischer Kochsalzlösung durchgeführt, wobei auch andere Werte (ganzzahlig oder Zwischenwerte) auswählbar sind.

Weiterhin ist es gemäß einer nächsten Erfindungsausgestaltung bevorzugt und vorteilhaft, wenn reife Eier mit einem Polarisationsindex PI mit 0,15 ≥ PI ≥ 0,04, bevorzugt 0,10 ≥ PI ≥ 0,05, einschließlich Rand- und Zwischenwerte behandelt werden. Eier mit diesem PI sind geeignet für eine Behandlung nach der Erfindung. Eier mit einem PI < 0,05 sind überreif, Eier mit 0,10 > PI > 0,05 sind reif und zur sofortigen Erntung geeignet, Eier mit 0,12 > PI > 0,10 sind nach einer Haltung von 2 bis 6 Tagen in wärmerem Wasser erntereif, Eier mit 0,15 > PI > 0,12 sind fast reif und benötigen noch eine weitere Haltung von 7 bis 14 Tagen bei Vermehrungstemperatur, Eier mit 0,18 > PI > 0,15 benötigen noch eine weitere Haltung von 20 bis 40 Tagen bei Vermehrungstemperatur, Eier mit einem PI > 0,18 sind unreif. Weitere Informationen über den Polarisationsindex PI von Eiern sind beispielsweise den Richtlinien für Störzucht (**Veröffentlichung VII** FAO Ankara 2011 Fisheries and Aquaculture Technical Paper 570 "Sturgeon Hatchery Practises and Management for Release - Guidelines") zu entnehmen. Der allgemein anerkannte Standard für Kaviar ist der **Veröffentlichung VIII** (Codex Alimentarius "Standard for Sturgeon Caviar" CXS 291-2010, geändert 2018) zu entnehmen.

Mit dem beanspruchten Verfahren können die reifen Eier aller derjenigen lebenden Wassertiere (Fische, Krustentiere, Mollusken) behandelt werden, deren Eier in Form von Kaviar oder kaviarähnlichen Produkten zum Verzehr geeignet sind, Beispiele siehe weiter oben. Bevorzugt und vorteilhaft können reife und abgestreifte Eier von lebenden Fischen, Krustentieren oder Mollusken aus Wildfängen oder aus Aquakulturzucht behandelt werden. Dabei können beispielsweise auch solche Tiere beerntet werden, die für einen Wiederbesatz in der freien Natur, beispielsweise einem Restocking-Projekt, vorgesehen sind. Der Erlös aus den Verkäufen von Kaviar und kaviarähnlichen Produkten kann dann wieder den Besatzmaßnahmen zugeführt werden. Reife Eier von lebenden Fischen können durch einfaches Abstreifen mittels Massage geerntet werden. Besonders bevorzugt und vorteilhaft ist es, wenn bei dem beanspruchten Verfahren reife befruchtungsfähige Eier von rezenten und urtümlichen lebenden Knochenfischen, bevorzugt von lebenden Störartigen, behandelt werden. Dann kann mit dem Verfahren echter Kaviar höchster Güte erzeugt werden. Aber auch kaviarähnliche Produkte vom Hummer (Krustentier) oder der Jakobsmuschel (Molluske) können mit dem beanspruchten Verfahren nach der Erfindung in höchster Qualität hergestellt werden.

Weiterhin können bevorzugt und vorteilhaft sehr große (oberhalb 3,2 mm Durchmesser) oder weiche, instabile ovulierte Eier (Textur im Härtetest unter 0,3 N, darüber zerplatzen die Eier) behandelt werden, da das Verfahren optional auch zwei Expositionsschritte umfassen kann. Im Kalium-Expositionsschritt wird mittels Kaliumionen eine elastische Verfestigung, im Calcium- Expositionsschritt wird mittels Calciumionen eine strukturelle Stabilisierung der Eihülle bewirkt. Durch diese doppelte Stabilisierung können auch die oben genannten Eier im reifen, befruchtungsfähigen Zustand behandelt werden.

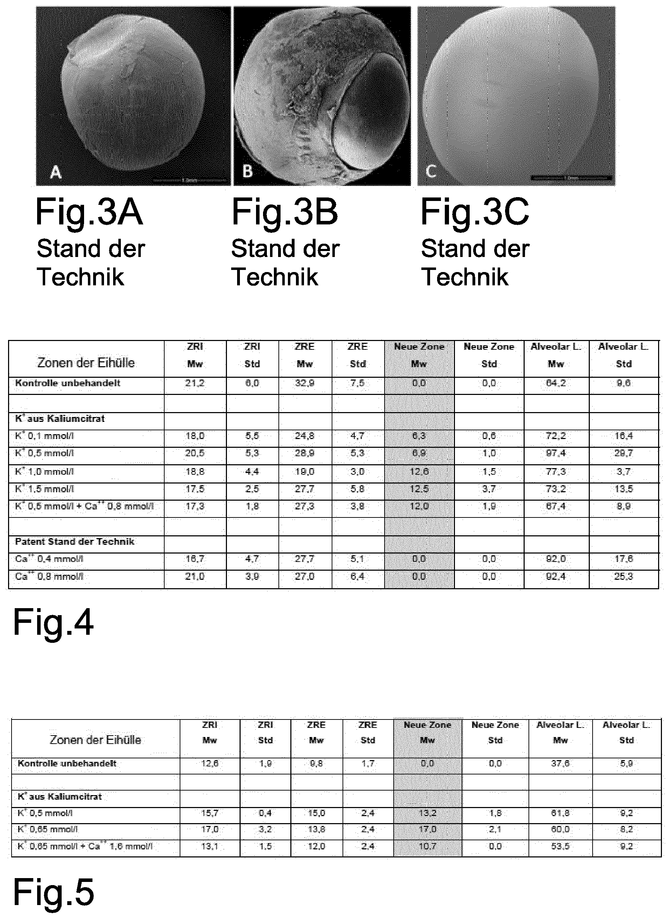

Schließlich werden mit der Erfindung auch unterschiedliche Produkte aus reifen eiern von Wassertieren (Fische, Krustentiere, Mollusken) beansprucht. Es wird Kaviar oder ein kaviarähnliches Produkt aus unbefruchteten, reifen Eiern von Wassertieren beansprucht, der dadurch gekennzeichnet ist, dass in der Eihülle eine neue Zone in Form einer eosinophilen, hyalinen Schicht mit eingelagerten Glucosaminoglykanen ausgebildet ist. Bei einer bevorzugten Produktmodifikation für Fische ist diese neue Zone zwischen einer Zona Radiata Interna und einer Alveolarschicht, bevorzugt zwischen einer Zona Radiata Externa und der Alveolarschicht, lokalisiert. Diese hyaline Schicht ist neu und der Fachwelt bislang nicht bekannt. Sie ist transparent, gelartig und elastisch ausgebildet und wird mit Eosin rot und mit Alcian blau histologisch gefärbt. Der Kaviar oder das kaviarähnliche Produkt kann mit dem beanspruchten Verfahren hergestellt werden, wobei die Ausprägung der hyalinen neuen Zone dann von der Kaliumionen-Konzentration im Kalium-Expositionsschritt abhängig ist (vergleiche auch die Tabelle Fig. 4). Andere Verfahren zur Herstellung von Kaviar oder einem kaviarähnlichen Produkt mit derselben Ausprägung einer neuen hyalinen Zone in der Eihülle sind ebenfalls anwendbar.

Weiterhin wird Kaviar oder ein kaviarähnliches Produkt aus unbefruchteten, reifen Eiern von Wassertieren beansprucht, der dadurch gekennzeichnet ist, dass in der Eihülle zusätzlich eine irreversible Vernetzung von Proteinsträngen durch eingebaute Tyrosin-Moleküle ausgebildet ist. Bei einer bevorzugten Produktmodifikation für Fische ist diese zusätzliche irreversible Vernetzung in einer Zona Radiata Interna und einer Zona Radiata Externa lokalisiert. Diese irreversible Vernetzung führt zu einer zusätzlichen strukturellen Verfestigung der Eihülle. Zusammen mit der vorhandenen elastischen Stabilisierung können damit auch besonders große oder weiche Eier behandelt werden. Der Kaviar oder das kaviarähnliche Produkt kann mit dem beanspruchten Verfahren hergestellt werden, wobei die Festigkeit der Proteinvernetzung in der Eihülle dann von der Calcium-Expositionszeit und der Calciumionen-Konzentration im Calcium-Expositionsschritt abhängig ist. Andere Verfahren zur Herstellung von Kaviar oder einem kaviarähnlichen Produkt mit derselben Ausprägung einer irreversiblen Proteinvernetzung in der Eihülle sind ebenfalls anwendbar. Weitere Ausführungen zu den mit der Erfindung beanspruchten Verfahren und Produkten sind dem nachfolgenden speziellen Beschreibungsteil zu den Ausführungsbeispielen zu entnehmen.

### Ausführungsbeispiele

Nachfolgend werden das Verfahren zur Herstellung von Kaviar oder einem kaviarähnlichen Produkt aus unbefruchteten, ovulierten Eiern von Wassertieren und Produkte nach der Erfindung und ihre vorteilhaften Modifikationen zum weiteren Verständnis der Erfindung an Ausführungsbeispielen und Figuren noch weitergehend erläutert. Dabei zeigt die
- **Fig.** 1A, B: zwei Tabellen zur Beziehung zwischen Gewicht (Alter) der Störe und Größe des Kaviarkornes und der Kaviarmenge,
- **Fig** 2: eine Tabelle zum möglichen Upscaling des Produktionsprozesses von Kaviar aus Eiern vom lebenden Stör,
- **Fig** 3A, B, C: REM-Aufnahmen zum Vergleich gewonnener Eier im unreifen und im reifen Zustand,
- **Fig. 4**: eine erste Tabelle zu Messungen des Membrandurchmessers bei Behandlung von reifen Eiern vom sibirischem Stör,
- **Fig. 5**: eine zweite Tabelle zu Messungen des Membrandurchmessers bei Behandlung von reifen Eiern vom Beluga-Stör,
- **Fig.** 6A, B, C, D: REM-Aufnahmen der Behandlungsserien zur Bildung der hyalinen Zone von unterschiedlich behandelten Eiern des Störs durch Kaliumbehandlung im Vergleich zur der Doppelbehandlung mit Kalium und Calcium sowie Calcium allein,
- **Fig.** 7A, B, C, D: TEM-Aufnahmen zum Aufbau der Schichten der Eihülle mit zur Bildung einer hyalinen neuen Zone (NZ) zwischen der Zona Radiata Externa (ZRE) und der Alveolarschicht (AL),
- **Fig.** 8A, B, C, D: TEM-Aufnahmen der Cortikal Granula von unbehandelten und unterschiedlich (Kaliumionen alleine, Doppelbehandlung mit Kalium- und Calciumionen, Calciumionen alleine) behandelten reifen Eiern des Störs,
- **Fig** 9A, B, C, D: lichtmikroskopische Aufnahmen von unbehandelten reifen Eiern vom sibirischen Stör und von mit Kaliumionen behandelten reifen Eiern vom sibirischen Stör,
- **Fig.** 10A, B, C, D: lichtmikroskopische Aufnahmen von mit Calciumionen behandelten reifen Eiern und von mit Kaliumionen und mit Calciumionen behandelten reifen Eiern vom sibirischen Stör und
- **Fig.** 11A, B: REM- und lichtmikroskopische Aufnahmen des Aufbaus der Eihülle beim Beluga-Stör nach der mit der Erfindung beanspruchten Behandlung der reifen Eier mit Kalium und Calcium.

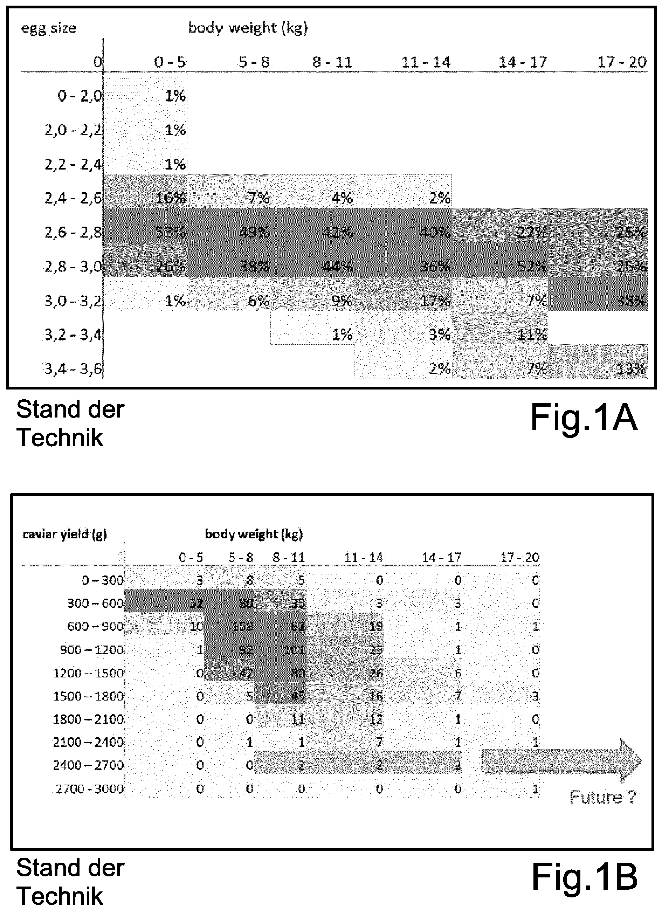

In den Tabellen in **Fig.** 1A und **Fig.** 1B aus dem Stand der Technik (aufgezeigt ist in **Fig.** 1A die Eigröße (egg size) in mm über dem Fischgewicht (body weight) in kg und in **Fig.** 1B der Kaviarertrag (caviar yield) in g über dem Fischgewicht (body weight) in kg) werden die Beziehungen zwischen dem Gewicht bzw. dem Alter von Stören und der Größe des Kaviarkornes bzw. der Menge des erntbaren Kaviars aufgezeigt. In der **Fig.** 1A ist zu erkennen, dass mit zunehmenden Gewicht bzw. Alter der Störe der Eidurchmesser zunimmt und damit die Qualität des Kaviars. In der **Fig.** 1B ist dargestellt, dass mit zunehmenden Gewicht bzw. Alter der Störe die Menge des geernteten Kaviars zunimmt und damit der ökonomische Erfolg. Der Pfeil "Future ?" deutet an, dass in Zukunft noch sehr viel größere Erträge erreicht werden können, was bislang noch nicht möglich ist, da keine derart älteren Störe in der Produktion existieren.

Störe werden in der natürlichen Umgebung erst mit 12 bis 26 Jahren je nach Spezies das erste Mal geschlechtsreif. Die Wachstumsphase bis zur ersten Reproduktion verbringen die Störe bis auf eine Spezies im Meer und wandern dann in die Flüsse ein, um ihre Laichgebiete auf steinigem Grund im Süßwasser zu finden. Aber auch in der Aquakultur benötigen Störe etwa 5 bis 16 Jahren je nach Störart bis zur ersten Geschlechtsreife und damit zur ersten Kaviarernte. Die wiederholte Ernte von Kaviar in der Aquakultur von lebenden Weibchen über viele Jahre setzt tierfreundliche Haltung der Fische mit optimaler Fütterung und niedriger Besatzdichte voraus und ist aufgrund der späten Geschlechtsreife und langen Lebensdauer immer ökonomisch und ökologisch sinnvoll. Eine Produktion von Kaviar im ökonomisch interessanten Tonnenbereich ist leicht möglich bei einem koordinierten Arbeitsablauf von Ernte und Behandlung der abgestreiften Eier zu Kaviar, beispielsweise mit 10 Fischen in 90 Minuten mit 7 Personen Personal.

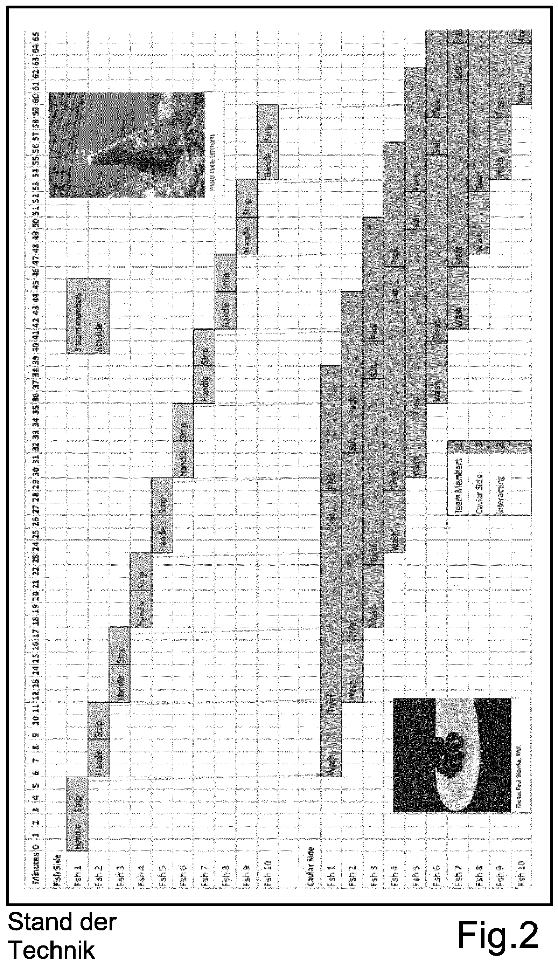

Die **Fig.** 2 zeigt dazu eine Tabelle aus dem Stand der Technik mit Erfahrungswerten für das Upscaling des Produktionsprozesses von Kaviar vom lebenden Stör, In der Darstellung ist oben aufgezeigt die Bearbeitungsdauer in Minuten (bei drei Mitarbeitern) zum Ernten der reifen Eier (Fish Side) über die Anzahl der Fische (Fish 1 bis Fish 10) mit den Arbeitsschritten "Handle" (Vorbereiten des Fisches) und "Strip" (Abstreifen der Eier). Unten ist die Verarbeitungszeit in Minuten der abgestreiften Eier (Caviar Side) mit den Arbeitsschritten "Wash" (Waschen), "Treat" Behandeln), "Salt" (Salzen zum Konservieren) und "Pack" (Verpacken zur Lagerung und Transport) über die Anzahl der Fische (Fish 1 bis Fish 10) dargestellt. Die unterschiedlichen Balken zeigen die Arbeitsteilung an. Innerhalb 60 Minuten können 10 Fische abgestreift werden und von einem Team von 6 Mitarbeitern gewaschen, behandelt, gesalzen und verpackt werden. Damit kann eine Tagesproduktion von 80 kg und mehr erreicht werden je nach Alter der Fische und der damit verbundenen Kaviarmenge.

Dabei werden diejenigen reifen Eier verwendet, die zuvor aufgrund ihres Reifestadiums (Stadium Befruchtungsfähigkeit und der Ovulationsbereitschaft) von feinen Muskelfasern der Follikelzellen aus der Gonade herausgedrückt werden, ein Prozess der als Ovulation bezeichnet wird. Die ovulierten Eier werden völlig sauber ohne Zellreste in die Eileiter und die Bauchhöhle des Fisches entlassen. Von dort können sie dann durch Massage des Bauches abgestreift werden, ohne das Leben des Fisches zu beeinträchtigen. Die völlig saubere Oberfläche der Eier bietet keine Nischen und Falten für den Befall durch Bakterien und Pilze, weshalb sich eine hohe Haltbarkeit des Kaviars oder des kaviarähnlichen Produkts ergibt, Eine Verwendung von Konservierungsmethoden z.B. mit Borax, das für die menschliche Gesundheit schädlich ist, ist nicht erforderlich. In den **Fig.** 3A, B, C sind aus dem Stand der Technik Rasterelektronenmikroskopische (REM) Aufnahmen eines unreifen Eies und des Ovulationsprozesses dargestellt. Die **Fig.** 3A zeigt eine unreife Eizelle mit Follikelzellen, wie sie beim konventionellen Kaviar vom getöteten Stör auftreten. Die **Fig.** 3B zeigt in-situ die Ovulation und Entlassung der reifen Eizelle aus der umgebenden Follikelzelle. Die **Fig.** 3C zeigt ein reifes, ovuliertes Störei, das vom lebenden Stör abgestreift wurde und bereit ist für eine Behandlung mit dem beanspruchten Verfahren nach der vorliegenden Erfindung.

An einem Ausführungsbeispiel wird nachfolgend der Verfahrensablauf des beanspruchten Verfahrens näher erläutert:
- Abstreifen vom lebenden Störweibchen von reifen, ovulierten Eiern im Reifestadium V nach der Auflösung der Germinalvesikel,
- unmittelbarer Transport der reifen abgestreiften Eier zusammen mit der Ovarialflüssigkeit in ein Kaviarlabor (Standzeiten werden weitgehend vermieden, unvermeidliche Standzeiten erfolgen auf Eis und unter Sauerstoffausschluss durch Abdecken der Ovarialflüssigkeit mit einer luftundurchlässigen Kunststofffolie),
- unmittelbare gründliche Spülung der reifen Eier in physiologischer Kochsalzlösung, bis die Ovarialflüssigkeit vollständig entfernt ist,
- Durchführen des Kalium-Expositionsschritts:
   - Herstellen einer wässrigen, 0,1 bis 2 millimolaren Kaliumionen-Lösung aus Kaliumcitrat in entionisiertem Wasser mit einer Leitfähigkeit von 10 µS/cm und einer Temperatur im Kaltwasserbereich von 10°C,
   - Einbringen der abgestreiften reifen ovulierten Eier in die erste wässrige Lösung für eine erste Expositionszeit von 5 min und
   - Herausnehmen der behandelten Eier aus der wässrigen Lösung und
- kurzes Dippen der behandelten Eier in eine 0,9 prozentige physiologische Kochsalzlösung.

Durch die Behandlung bildet sich bei den Eiern eine elastische hyaline neue Zone zwischen der Zona Radiata Externa und der Alveolarschicht in der Eihülle aus. Durch das Dippen wird der Bildungsprozess abgebrochen. Bei Eiern normaler Größe und Weichheit genügt eine Behandlung mit dem Kalium-Expositionsschrittes mit Kaliumionen. Werden bei der zuvor erläuterten Behandlung der abgestreiften reifen Eier aber besonders große, weiche oder empfindliche Eier einiger Störgattungen, beispielsweise *Huso huso, Acipenser transmontanus* oder *Acipenser ruthenus,* eingesetzt, kann bevorzugt und sehr vorteilhaft ein Calcium-Expositionsschritt angeschlossen werden:
- Durchführen des Calcium-Expositionsschritts:
   - Herstellen einer anderen wässrigen 0,5 bis 2 millimolaren Calciumionen-Lösung aus Calciumchlorid in entionisiertem Wasser mit einer Leitfähigkeit von 10 µS/cm und einer Temperatur im polaren Temperaturbereich von 10°C,
   - Einbringen der abgestreiften reifen ovulierten Eier in die andere wässrige Lösung für eine Calcium-Expositionszeit von 12 min und
   - Herausnehmen der behandelten Eier aus der anderen wässrigen Lösung und
- kurzes Dippen der behandelten Eier in eine 0,9 prozentige physiologische Kochsalzlösung

Es bildet sich im Calcium-Expositionsschritt zusätzlich zur elastischen hyalinen neuen Zone aus dem Kalium-Expositionsschritt noch eine strukturelle Proteinvernetzung der Eihülle aus, die bei Fischen in der Zona Radiata Interna und der Zona Radiata Externa der Eihülle lokalisiert ist. Diese zusätzliche strukturelle Proteinvernetzung der Eihülle verleiht den großen und vor der Behandlung weichen oder empfindlichen Eiern eine besondere Festigkeit - neben der Elastizität aus dem Kalium-Expositionsschritt. Bei dem entstandenen Produkt handelt es sich um echten Kaviar aus reifen Eiern, der wie folgt weiterverarbeitet werden kann:
- Vermischen des Kaviars aus reifen abgestreiften ovulierten Eiern mit trockenem, weder Kalium noch Calcium enthaltendem (Ca⁺⁺- und K⁺-freie Rieselhilfen) Kochsalz NaCl (3,8 g / 100g Kaviar), Malossol-Salzung zur Konservierung,
- Abfüllen des gesalzenen Kaviars aus reifen Eiern in Glasbehälter, vorzugsweise 500 g Reifungsgläsern, und luftdichtes Vakuumverschließen der Behälter mit Schraubdeckeln und Etikettieren,
- Lagern der Glasbehälter bei -2°C für 2 bis 4 Monate zur weiteren Reifung des Kaviars aus den reifen Eiern und optional
- Einfrieren des frischen Kaviars oder des nach Kundenwunsch gereiften Kaviars in den Glasbehältern bei -18°C.

Die Struktur der extrazellulären Matrix von Fischeiern folgt einem Grundmuster und wird für das Verfahren nach der Terminologie gemäß **Veröffentlichung IX** (Siddique et al.: "A review of the structure of sturgeon egg membranes and of the associated terminology", J. Appl. Ichthyol. (2014), 1-10) beschrieben. Die Eihülle baut sich von außen nach innen wie folgt auf: in heranreifenden Oozyten (Eizellen) umgibt das Follikel, bestehend aus Granulosa- und Thecalzellen mütterlichen Ursprunges, das Ei, um es mit Signal- und Nährstoffen zu versorgen. Bei der Ovulation wird das Ei aus diesen Zellen mit Hilfe von Proteasen und durch Kontraktion von Muskelfibrillen der Follikelzellen herausgelöst und in die Bauchhöhle des Fisches entlassen. Das ovulierte Ei behält nur seine während der Eireifung selbst gebildeten azellulären Schichten als extrazelluläre Matrix, nämlich die Alveolarschicht (Alveolar Layer AL), die Zona Radiata Externa (ZRE), die Epischicht (EP), danach die Zona Radiata Interna (ZRI) und ein Spalt, in den die Eihülle (Plasmamembran PM) des Eies zahlreiche Mikrovilli (MV) ausstülpt, die auch Extra-Oozyten-Matrix genannt werden. Die bei der Erfindung bei den mit Kaliumionen behandelten reifen Eiern ausgebildete hyaline neue Zone zwischen der Alveolarschicht und der Zona Radiata Externa, die bislang in der Literatur nicht beschrieben wurde, bildet eine elastische stabilisierende Schicht. Dabei kann diese neue Zone auch bei behandelten Eiern von anderen Wassertieren, deren Eier einen von dem oben beschrieben Aufbau abweichenden Aufbau (wobei die Abweichungen aber nicht grundsätzlicher Natur sind) aufweisen, ausgebildet werden.

Der Tabelle in der **Fig.** 4 liegen Membranmessungen an reifen Eiern des sibirischen Störs anhand von Kryoschnitten konstanter Schichtdicke (10 µm) mithilfe der computergesteuerten Bildanalyse (Zeiss) unter dem Einfluss unterschiedlicher Behandlungen der Stabilisierung der extrazellulären Matrix zugrunde.

Es sind in der Tabelle die Bildung neuer und der Durchmesser vorhandener Zonen der Eihülle unter der Behandlung mit unterschiedlichen Konzentrationszugaben in mmol/l von Kaliumionen allein und von Kaliumionen (aus Kaliumcitrat) in der Kombination mit Calciumionen (aus Calciumchlorid) während der Expositionsschritte gemäß der Erfindung aufgezeigt. Es wurden reife Eier vom sibirischen Stör *Acipenser baerii* behandelt. Neben den zuvor erläuterten Akronymen bedeutet noch Mw Mittelwert, Std Standardabweichung. Hinterlegt sind die Werte für die "neue Zone" (NZ). Mit Patent Stand der Technik wird Rückbezug genommen auf die oben genannte WO 2007/045233 A1**.** Die Qualitätskontrollen nach den Behandlungen zeigten, dass erst ab Konzentrationen von 1mmol/l und 1,5 mmol/ l Kalium mit einer Membranstärke (dicke der Eihülle) von mindestens 12 µm ein Produkt entsteht, dass die Klebrigkeit verloren hat und stabil genug für die weitere Verarbeitung des Kaviars ist. Desweiteren zeigte sich, dass eine Behandlungsdauer von mindestens 5 min erforderlich ist, damit alle in der wässrigen Lösung befindlichen reagieren. Es ergibt sich eine Behandlungsmenge von 2,5 kg Kaviar (in ca. 25 l wässriger Lösung) in einer Behandlungseinheit. Die sensorische Prüfung des Kaviars nach der erfindungsgemäßen Behandlung mit Kaliumionen zeigte, dass die elastische Textur des Kaviars des sibirischen Störs keine Unterschiede bei Konzentrationsvariationen zwischen 1 mmol/l und 1,5 mmol/l aufweist. Dagegen sind die in einer wässrigen Lösung mit niedrigeren Kaliumionen-Konzentrationen behandelten Eier unterschiedlich in der Textur und nur einige wenige Eier stabil, während die unbehandelten Eier der 0. Kontrolle sehr weich sind und zerplatzen. Gemäß den sensorischen Tests führt eine Behandlung mit zwei Expositionsschritten zu einem festen, perligen Produkt, auch als "Superplop" bei Eiern des sibirischen Störs bezeichnet.

Die Tabelle in **Fig.** 5 zeigt das Vorhandensein und den Durchmesser von Zonen der Eihülle mit unterschiedlichen Behandlungen nach der Erfindung der großen Eier vom Belugastör *Huso huso* auf. Auch bei der Behandlung von diesem Kaviar mit Kaliumionen (aus Kaliumcitrat) wurde die Ausbildung der neuen eosinophilen Zone in der extrazellulären Matrix beobachtet, die ebenfalls zwischen der ZRE und AL lokalisiert ist. Für die großen Eier des Belugastörs zeigten die sensorischen Tests, dass die Doppelbehandlung von Kalium und Calcium zu optimalen Ergebnissen bezüglich der Textur der fragilen reifen Eier führt. Neben den zuvor erläuterten Akronymen bedeutet noch Mw Mittelwert, Std Standardabweichung. Hinterlegt sind die Werte für die neue Zone" (NZ).

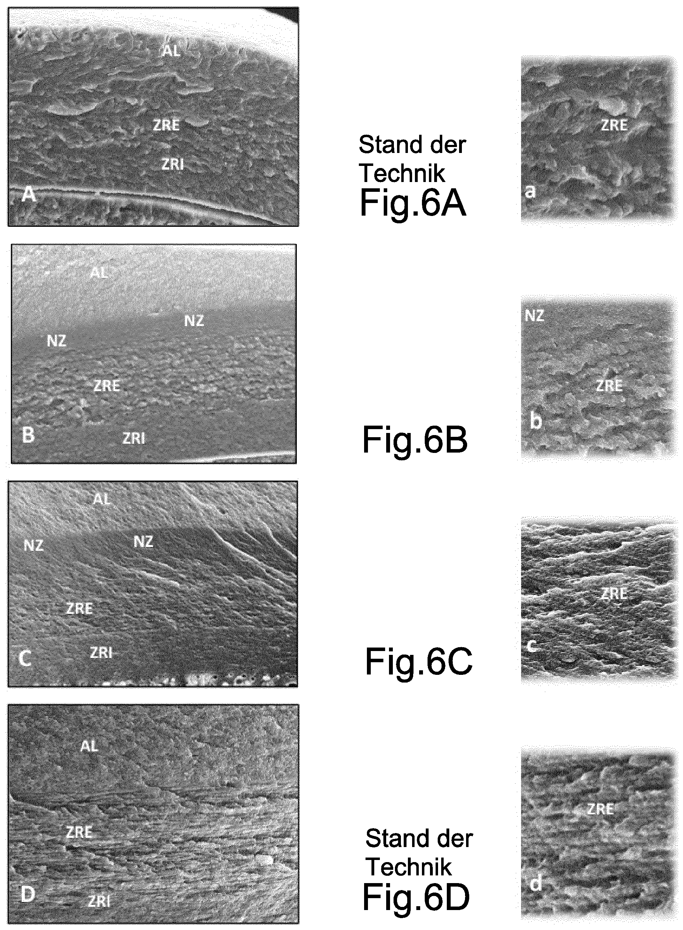

Die **Fig.** 6A, B, C, D zeigen REM-Aufnahmen der Veränderung des Aufbaus der extrazellulären Matrix (Eihülle) eines reifen, ovulierten Eies exemplarisch vom sibirischen Stör unter verschiedenen Behandlungen. Es werden zwei Vergrößerungen gezeigt: links 6000fach und rechts (Ausschnitte) 12000fach.
- **Fig.** 6A: In unbehandelten reifen Eiern zeigen die Zonen der Eihülle keine klare Abtrennung zueinander (Stand der Technik).
- **Fig.** 6B: Unter dem Einfluss von 0,5 mmol/l Kalium entsteht bereits eine bei der Erfindung so genannte "neue Zone" (NZ) zwischen der Zona Radiata Externa (ZRE) und der Alveolarschicht (AL), während die Zona Radiata Interna (ZRI) und Zona Radiata Externa (ZRE) einen unverändert lockeren Proteinverband wie bei unbehandelten Eiern zeigt.
- **Fig.** 6C: Die aufeinanderfolgende Doppelbehandlung der reifen Eier mit Kalium und Calcium zeigt im REM beide charakteristischen morphologischen Merkmale, nämlich die neue Zone (NZ) der Kaliumbehandlung UND die Verdrillung und Vernetzung der Proteinstränge in der Zona Radiata Interna (ZRI) und der Zona Radiata Externa (ZRE), welche charakteristisch ist für eine Calciumbehandlung, vergleiche **Fig.** 6D.
- **Fig,** 6D: Eine Calciumbehandlung allein führt zur starken Verdrillung und Vernetzung der lockeren Proteinstränge in der Zona Radiata Interna (ZRI) und der Zona Radiata Externa (ZRE) (Stand der Technik), vergleiche gegen über **Fig.** 6A und **Fig.** 6B ohne Calciumbehandlung.

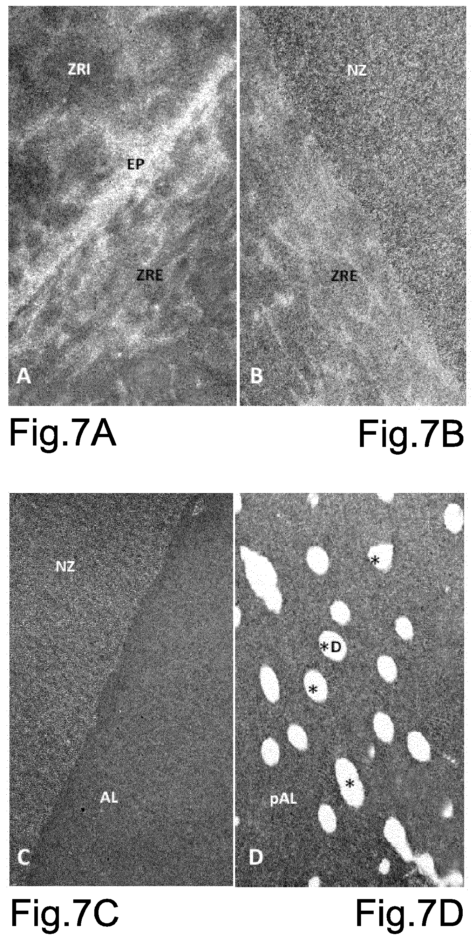

Die **Fig.** 7A, B, C, D zeigen transmissionselektronenmikroskopische Aufnahmen (TEM, 3000-fache Vergrößerung) des mehrschichtigen Aufbaus der Eihülle von reifen Störeiern bei der Behandlung mit 1,0 mMol/l Kaliumionen. Die **Fig.** 7A zeigt die Zona Radiata Interna (ZRI) mit losen, wolkigen Fibrillen, die durch die Epischicht (EP) von der Zona Radiata Externa (ZRE) separiert ist (Phänomen ist nur ultrastrukturell identifizierbar). Die Zona Radiata Externa (ZRE) ist durch ein filamentöses Netzwerk aus langgestreckten Fibrillen charakterisiert. Die **Fig.** 7B zeigt die ultrastrukturelle Ausbildung der neuen Zone (NZ) mit einer feingranulären Struktur direkt zwischen der Zona Radiata Externa (ZRE) und - gemäß **Fig.** 7C - der Alveolarschicht (AL), die zur Peripherie der Eihülle hin - gemäß **Fig.** 7D - von kleinen Duktuli (kleine Gänge, Kanälchen) durchdrungen ist. Die ultrastrukturellen Analysen bestätigen, dass die Behandlung mit Kaliumionen (1,0 mMol/l) nach der Erfindung zur Bildung einer bislang unbekannten neuen Zone (NZ) mit amorpher Struktur und Positionierung bei Fischen zwischen der Zona Radiata Externa (ZRE) und Alveolarschicht (AL) führt.

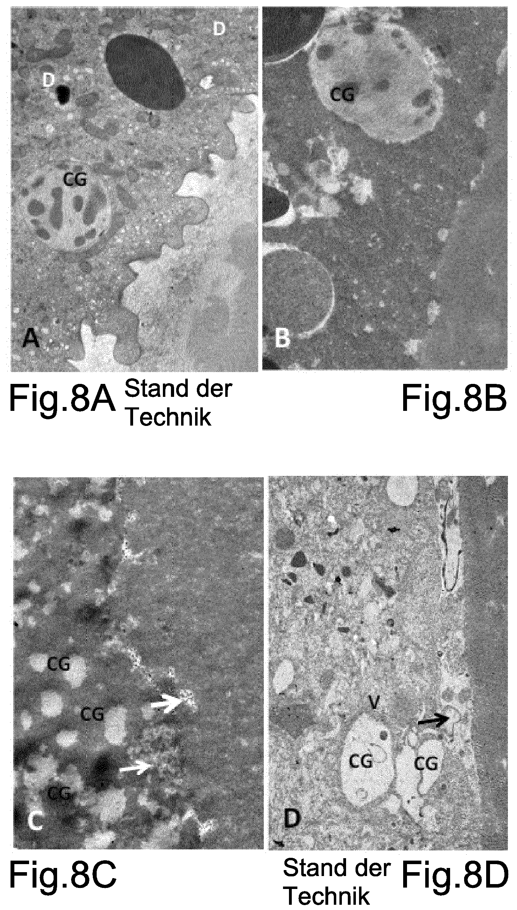

In den **Fig.** 8A, B, C, D sind TEM-Aufnahmen (3000-fache Vergrößerung) der Cortikal Granula (CG) im peripheren Zytoplasma (Zellinneres innerhalb der äußeren Zellmembran (Ooplasmamembran)) der Eier gezeigt, wobei die **Fig.** 8A ein unbehandeltes Ei (Stand der Technik), die **Fig.** 8B ein mit Kalium behandeltes Ei (Erfindung), die **Fig.** 8C ein mit Kalium und Calcium behandeltes Ei (Erfindung) und die **Fig.** 8D ein nur mit Calcium behandeltes Ei (Stand der Technik) zeigt.

Cortikal Granula sind sekretorische Organellen (strukturell abgrenzbare Bereiche), die in Eiern gefunden werden und eng mit der Verhinderung von Polyspermie nach dem Befruchtungsereignis verbunden sind. Cortikale Granula enthalten Enzyme und Strukturelemente zur Vernetzung der Zona Radiata Interna (ZRI) und der Zona Radiata Externa (ZRE). Wie mithilfe der TEM unter dem Einfluss der verschiedenen Behandlungen analysiert wurde, wird die Cortikal Reaktion und die Entlassung ihres Inhaltes ausschließlich durch die Behandlung mit Calcium ausgelöst. Ein identischer Prozess findet auch bei der natürlichen Befruchtung durch die Calciumwelle statt. Im unbehandelten Ei (**Fig.** 8A) sind im peripheren Ooplasma die Cortikal Granula mit ihrer Enzymausstattung klar als große, runde Vesikel (Bläschen) zu erkennen, die auch strukturelle Elemente enthalten. Auch bei der Kaliumbehandlung gemäß der Erfindung allein (**Fig.** 8B) sind die Cortikal Granula nach wie vor unverändert vorhanden. In den **Fig.** 8A und **Fig.** 8B ist mit "D" der Dotter bezeichnet. Bei einer Doppelbehandlung mit Kalium und Calcium (**Fig.** 8C) gemäß der Erfindung kommt es zur Entlassung (Pfeile) des Inhaltes der Cortikal Granula und zur Ausbildung der neuen Zone (NZ), während die Behandlung mit Calcium allein (**Fig.** 8D) nur zur Cortikal Reaktion führt, wobei der Inhalt in die extrazelluläre Matrix (Eihülle) entlassen wird (vesikulärer Transport) und die enzymatische Vernetzung der Zona Radiata Interna (ZRI) und Zona Radiata Externa (ZRE) durch Tyrosinreste initiiert. Im Ooplasma verbleiben leere Vakuolen (V).

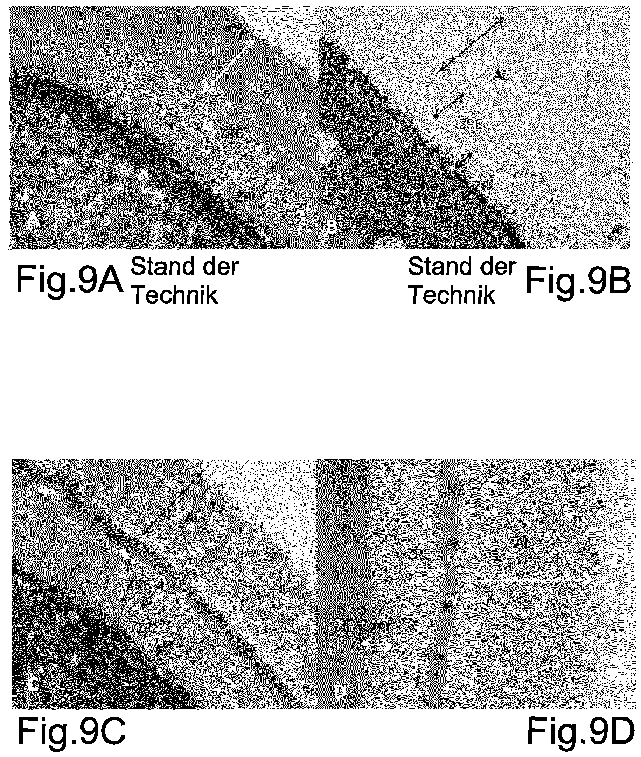

Zum diagnostischen Screening an Kryoschnitten zum Kaliumeffekt bei der Erfindung sind aus dem Stand der Technik in den **Fig.** 9A und **Fig.** 9B lichtmikroskopische Aufnahmen (400 fache Vergrößerung) von unbehandelten Eiern mit extrazellulärer Eihülle des sibirischen Störs *Acipenser baerii* aufgezeigt. Das linke Foto gemäß **Fig.** 9A zeigt eine HE-Färbung (Hämatoxylin-Eosin-Färbung), das rechte Foto gemäß **Fig.** 9B zeigt eine Färbung mit Alcianblau. Dieser Test färbt Glucosaminoglykane GAG, Hyaluron und Fibrin an. Zu erkennen ist, dass das Alcianblau in den verschiedenen Schichten der Eihülle fehlt, aber ausgeprägt im Ooplasma OP vorhanden ist. Die einzelnen Schichten sind entsprechend den voranstehenden Ausführungen bezeichnet und in ihren Dicken mit Doppelpfeilen gekennzeichnet.

In der **Fig.** 9C und **Fig.** 9D sind dagegen Fotos von Kryoschnitten von mit dem beanspruchten Verfahren nach der Erfindung im Kalium-Expositionsschritt behandelten ovulierten Eiern des sibirischen Störs *Acipenser baerii* dargestellt. Die reifen ovulierten Eier wurden mit einer Konzentration von 1,5 mmol/l Kaliumionen (K⁺, aus Kaliumcitrat) behandelt. Auffällig ist das Auftreten der neuen Zone (hier mit * NZ * bezeichnet) zwischen der Zona Radiata Externa (ZRE) und der Alveolarschicht (AL) in der extrazellulären Matrix (Eihülle). Im linken Foto gemäß **Fig.** 9C zeigt sich nach der Färbung mit Eosin, dass diese neue Zone (NZ) besonders eosinophil ist. Im rechten Foto gemäß **Fig.** 9D zeigt sich nach der Färbung mit Alcianblau, dass diese neue Zone (NZ) besonders reich an GAG und elastisch ausgebildet ist.

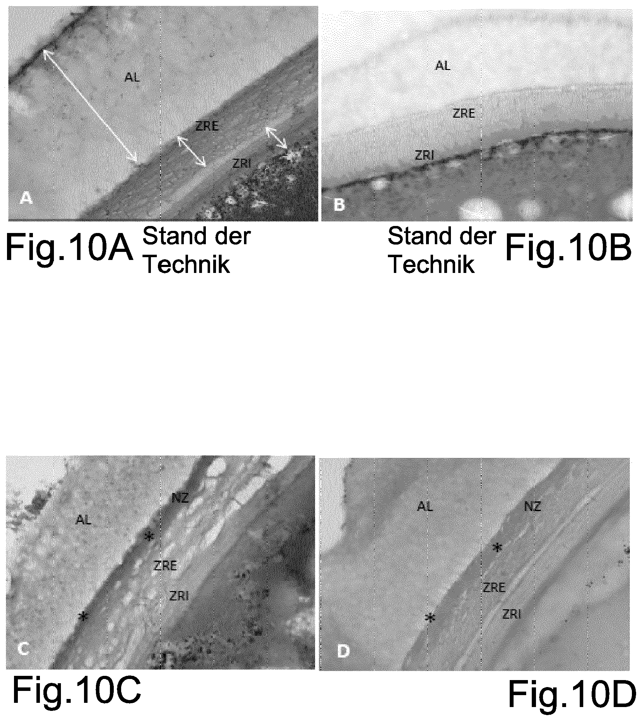

Zum diagnostischen Screening an Kryoschnitten zum Calciumeffekt allein und Doppelbehandlungseffekt Kalium und Calcium nach der Erfindung sind in den **Fig.** 10A und **Fig.** 10B aus dem Stand der Technik Fotos von Kryoschnitten von mit dem Verfahren gemäß der WO 2007/045233 A1 behandelten ovulierten Eiern des sibirischen Störs *Acipenser baerii* in 400facher Vergrößerung dargestellt. Das linke Foto gemäß **Fig.** 10A zeigt eine HE-Färbung (Hämatoxylin-Eosin-Färbung), das rechte Foto gemäß **Fig.** 10B zeigt eine Färbung mit Alcianblau. Es wurden die ovulierten Eier des sibirischen Störs behandelt. Im linken Foto gemäß **Fig.** 10A mit der HE-Färbung sind die durch Tyrosinmoleküle vernetzten Proteinstränge in der Zona Radiata Interna (ZRI) und Zona Radiata Externa (ZRE) zu erkennen. Außerdem ist eine deutliche Trennung zwischen beiden Zonen zu erkennen. Durch die Vernetzung ergibt sich eine festigende Stabilisierung der Eihülle. Im rechten Foto gemäß **Fig.** 10B mit der Alcianblau-Färbung ist zu erkennen, dass die Zona Radiata Interna (ZRI) und die Zona Radiata Externa (ZRE) nur sehr schwach gefärbt sind, was auf wenig GAG schließen lässt, wohingegen im Ooplasma OP eine starke Färbung sehr viel GAG anzeigt.

In den **Fig.** 10C und **Fig.** 10C sind zur Erfindung Fotos von Kryoschnitten von mit dem beanspruchten Verfahren ovulierten Eiern aufgezeigt, die in dem zusätzlichen Calcium-Expositionsschritt mit dem Verfahren gemäß der WO 2007/045233 A1 behandelt worden sind. Die reifen ovulierten Eier des sibirischen Störs *Acipenser baerii* wurden im Kalium-Expositionsschritt mit 1,5 mmol/l Kaliumionen (K⁺, aus Kaliumcitrat) und im Calcium-Expositionsschritt mit 1,6 mmol/l Calciumionen (Ca⁺⁺, aus Calciumchlorid) behandelt. Zusätzlich zu der in den Fotos gemäß **Fig.** 10A und **Fig.** 10B gezeigten verfestigenden Vernetzung der Eihülle ist nunmehr auch die in den Fotos gemäß **Fig.** 10C und **Fig.** 10D aufgezeigte hyaline neue Zone (mit * NZ * bezeichnet) mit einer elastischen Stabilisierung der Eihülle zu erkennen. Die behandelten reifen, ovulierten Eier des sibirischen Störs sind somit sowohl elastisch als auch strukturell stabilisiert und bilden einen perfekten Kaviar.

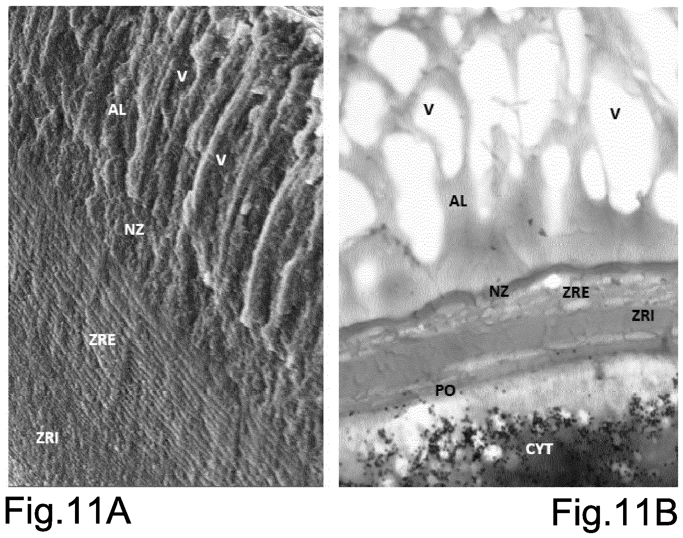

In der **Fig.** 11A ist eine charakteristische REM-Aufnahme (12000-fache Vergrößerung) der Eihülle von reifen ovulierten Eiern vom Belugastör *Huso huso* nach der Doppelbehandlung nach der Erfindung dargestellt. Die **Fig.** 11B zeigt eine lichtmikroskopische Aufnahme (400-fache Vergrößerung) der Eihülle von reifen ovulierten Eiern vom Belugastör *Huso huso* nach der Doppelbehandlung nach der Erfindung. Beide Aufnahmen zeigen die neue Zone (NZ) und die Vernetzung der Zona Radiata Interna (ZRI) und Zona Radiata Externa (ZRE). Desweiteren fällt auf, dass die Eier des *Huso huso* eine extrem ausgeprägte Alveolarschicht (AL) mit großen Vakuolen (V) besitzen. Das Screening anhand der Kryoschnitte mit H&E-Färbung bestätigt die Bildung einer elastischen neuen Zone (NZ) bei der Erfindung mit einem Expositionsschritt und die calciumabhängige Proteinvernetzung bei der Erfindung mit zwei Expositionsschritten.

### Bezugszeichenliste

- AL: Alveolarschicht
- Ca⁺⁺: Calciumion(en)
- CG: Cortikal Granula
- D: Dotter
- E: Eosin
- EP: Epischicht
- Extr: Extraschicht (hyaline Schicht) (=NZ)
- GAG: Glucosaminoglykan
- HE: Hämatoxylin
- K⁺: Kaliumion(en)
- MV: Mikrovilli
- Mw: Mittelwert
- NZ: neue (hyaline) Zone
- OP: Oozytenplasma
- PO: Plasmamembran der Oozyte
- PM: Plasmamembran
- Std: Standardabweichung
- V: Vakuole
- ZRI: Zona Radiata Interna
- ZRA: Zona Radiata Externa

## Patentansprüche

1. Verfahren zur Herstellung von Kaviar oder einem kaviarähnlichem Produkt aus unbefruchteten, reifen Eiern von lebenden Wassertieren mittels Behandlung der reifen Eier in zumindest einer wässrigen Lösung, enthaltend Wasser und zumindest eine darin gelöste, eine Veränderung der Eihülle induzierende ionische Komponente, wobei die Eier vor der Behandlung in physiologischer Kochsalzlösung gespült werden,
**dadurch gekennzeichnet, dass** in einem Kalium-Expositionsschritt im Wasser als ionische Komponente Kalium in einer physiologischen Konzentration gelöst ist, wobei das Wasser vor der Zugabe eines Kaliumdonators für die Bildung der ionischen Komponente in technisch erreichbarer Weise entionisiert ist, und die reifen Eier in der wässrigen Lösung für eine vorgegebene Kalium-Expositionszeit zur Veränderung eines elektrischen Polarisationszustandes der Eihülle behandelt werden, wobei die wässrige Lösung eine physiologische Temperatur aufweist, die im natürlichen Lebensbereich des Wassertieres, dessen reife Eier behandelt werden, auftritt, und Temperaturen, die zu einer Atresie oder zu einer Proteindenaturierung der Eier führen, während der gesamten Behandlung vermieden sind.

2. Verfahren nach Anspruch 1,
**dadurch gekennzeichnet, dass** als Kaliumdonator zumindest ein Kaliumsalz, bevorzugt das Salz der Zitronensäure (Kaliumcitrat E332) und/oder das Salz der Salzsäure (Kaliumchlorid E508) und/oder das Salz der Sorbinsäure (Kaliumsorbat E202), eingesetzt ist.

3. Verfahren nach Anspruch 2,
**dadurch gekennzeichnet, dass** die Stoffmengenkonzentration des Kaliumsalzes in der einen wässrigen Lösung zwischen 0,1 mmol/l und 3,0 mmol/l einschließlich der Randwerte, bevorzugt 0,1 mmol/l, 0,5 mmol/l, 0,65 mmol/l, 1,6 mmol/l oder 2,0 mmol/l, besonders bevorzugt 1,0 mmol/l oder 1,5 mmol/l, beträgt

4. Verfahren nach einem der vorangehenden Ansprüche,
**dadurch gekennzeichnet, dass** die Kalium-Expositionszeit für den Kalium-Expositionsschritt in Abhängigkeit von dem Wassertier, dessen reife Eier behandelt werden, zwischen 2 min und 30 min einschließlich der Rand- und Zwischenwerte, bevorzugt bei 5 min, 12 min, 15 min, 20 min oder 25 min, liegt.

5. Verfahren nach einem der vorangehenden Ansprüche,
**dadurch gekennzeichnet, dass** anschließend an den Kalium-Expositionsschritt oder diesem vorhergehend in einem Calcium-Expositionsschritt in einer anderen wässrigen Lösung als ionische Komponente Calcium in einer physiologischen Konzentration gelöst ist, wobei das Wasser vor der Zugabe eines Calciumdonators für die Bildung der ionischen Komponente in technisch erreichbarer Weise entionisiert ist.

6. Verfahren nach Anspruch 5,
**dadurch gekennzeichnet, dass** als Calciumdonator zumindest ein Calciumsalz, bevorzugt Calciumcitrat, Calciumchlorid und/oder Calciumsorbat, eingesetzt ist

7. Verfahren nach Anspruch 6,
**dadurch gekennzeichnet, dass** die Stoffmengenkonzentration des Calciumsalzes in der anderen wässrigen Lösung zwischen 0,1 mmol/l und 3,0 mmol/l einschließlich der Randwerte, bevorzugt 0,1 mmol/l, 0,5 mmol/l, 0,8 mmol/l, 1,0 mmol/l, 1,5 mmol/l, 1,6 mmol/l oder 2,0 mmol/l, beträgt.

8. Verfahren nach einem der Ansprüche 5 bis 7,
**dadurch gekennzeichnet, dass** die Calcium-Expositionszeit für den Calcium-Expositionsschritt in Abhängigkeit von dem Wassertier, dessen reife Eier behandelt werden, zwischen 9 min und 30 min einschließlich der Rand- und Zwischenwerte, bevorzugt bei 10 min, 12,5 min, 15 min, 16 min, 20 min oder 25 min, liegt.

9. Verfahren nach einem der vorangehenden Ansprüche,
**dadurch gekennzeichnet, dass** die physiologische Temperatur der einen wässrigen Lösung (Kalium-Expositionsschritt) und/oder der anderen wässrigen Lösung (Calcium-Expositionsschritt) einem polaren Temperaturbereich zwischen 1°C und 15°C, bevorzugt zwischen 5°C und 12°C, besonders bevorzugt 10°C, einem gemäßigten Temperaturbereich zwischen 10°C und 20°C, bevorzugt 15°C, besonders bevorzugt 12 °C, oder einem tropischen Temperaturbereich zwischen 20°C und 29°C, bevorzugt 27°C, besonders bevorzugt 21°C, einschließlich Rand- und Zwischenwerte, entnommen ist.

10. Verfahren nach einem der vorangehenden Ansprüche,
**dadurch gekennzeichnet, dass** das in technisch erreichbarer Weise entionisierte Wasser eine elektrische Leitfähigkeit zwischen 1 µS/cm und 15 µS/cm einschließlich der Randwerte, bevorzugt 10 µS/cm oder darunter, besonders bevorzugt 5 µS/cm, aufweist.

11. Verfahren nach einem der vorangehenden Ansprüche,
**dadurch gekennzeichnet, dass** die eine und/oder die andere wässrige Lösung einen physiologischen pH-Wert zwischen 6,8 und 8,0 einschließlich der Rand- und Zwischenwerte, bevorzugt zwischen 7,0 und 7,9, besonders bevorzugt 7,2 oder 7,4 oder 7,5, aufweist.

12. Verfahren nach einem der vorangehenden Ansprüche,
**dadurch gekennzeichnet, dass** anschließend an den Kalium-Expositionsschritt oder an den Kalium- und den Calcium-Expositionsschritt zur Konservierung und Geschmacksintensivierung eine milde Salzung mit bezogen auf eine Menge Kaviar oder kaviarähnlichem Produkt 3,2 % bis 3,8 %, bevorzugt 3,5 %, Salz einschließlich der Rand- und Zwischenwerte durchgeführt wird, wobei das Salz frei von Kalium- und Calciumdonatoren ist.

13. Verfahren nach Anspruch 12,
**dadurch gekennzeichnet, dass** anschließend an die Konservierung und Geschmacksintensivierung eine Lagerung des Kaviars oder des kaviarähnlichen Produkts in luftdicht verschlossenen Glasbehältern über mehrere Monate, bevorzugt ein bis drei Monate, zur Reifung durchgeführt wird, wobei ein Reifungsgrad zeitabhängig festlegbar ist.

14. Verfahren nach Anspruch 12 oder 13,
**dadurch gekennzeichnet, dass** anschließend an die Konservierung und Geschmacksintensivierung oder die Lagerung und Reifung ein Einfrieren des Kaviars oder des kaviarähnlichen Produkts in einem Temperaturbereich zwischen -20°C und -15°C, bevorzugt bei -18°C, einschließlich der Rand- und Zwischenwerte durchgeführt wird.

15. Verfahren nach einem der vorangehenden Ansprüche,
**dadurch gekennzeichnet, dass** nach dem Kalium-Expositionsschritt und optional dem Calcium-Expositionsschritt zur Entfernung der jeweiligen ionischen Komponente von den behandelten ovulierten Eiern ein Dippen der ovulierten Eier in physiologische Kochsalzlösung durchgeführt wird.

16. Verfahren nach Anspruch 1 und/oder 15,
**dadurch gekennzeichnet, dass** eine 0,6 prozentige bis 1,0 prozentige, bevorzugt 0,9 prozentige, einschließlich Rand- und Zwischenwerte physiologische Kochsalzlösung eingesetzt wird.

17. Verfahren nach einem der vorangehenden Ansprüche,
**dadurch gekennzeichnet, dass** reife Eier mit einem Polarisationsindex PI mit 0,15 ≥ PI ≥ 0,04, bevorzugt 0,10 ≥ PI ≥ 0,05, einschließlich Rand- und Zwischenwerte behandelt werden.

18. Verfahren nach einem der vorangehenden Ansprüche,
**dadurch gekennzeichnet, dass** reife und abgelaichte oder abgestreifte Eier von lebenden Fischen, Krustentieren oder Mollusken aus Wildfängen oder aus Aquakulturzucht behandelt werden.

19. Verfahren nach Anspruch 18,
**dadurch gekennzeichnet, dass** reife und abgestreifte Eier von rezenten und urtümlichen lebenden Knochenfischen, bevorzugt von lebenden Störartigen, behandelt werden.

20. Verfahren nach einem der Ansprüche 6 bis 19,
**dadurch gekennzeichnet, dass** sehr große Eier mit einer Korngröße gleich oder größer 3,2 mm Durchmesser oder weiche, instabile reife Eier mit einer Belastbarkeit bis zum Zerplatzen kleiner oder gleich 0,3 N behandelt werden.

21. Kaviar oder kaviarähnliches Produkt aus unbefruchteten, reifen Eiern von Wassertieren, herstellbar nach einem der Ansprüche 1 bis 5 und 10 bis 20,
**dadurch gekennzeichnet, dass** in der Eihülle eine neue Zone (NZ) in Form einer eosinophilen, hyalinen Schicht mit eingelagerten Glucosaminoglykanen ausgebildet ist.

22. Kaviar oder kaviarähnliches Produkt aus unbefruchteten, reifen Eiern von Wassertieren nach Anspruch 21,
**dadurch gekennzeichnet, dass** bei Fischen die neue Zone (NZ) zwischen einer Zona Radiata Interna (ZRI) und einer Alveolarschicht (AL) der Eihülle, bevorzugt zwischen einer Zona Radiata Externa (ZRE) und der Alveolarschicht (AL), lokalisiert ist.

23. Kaviar oder kaviarähnliches Produkt nach Anspruch 21 oder 22, herstellbar nach einem der Ansprüche 6 bis 20,
**dadurch gekennzeichnet, dass** in der Eihülle eine zusätzliche irreversible Vernetzung von Proteinsträngen durch eingebaute Tyrosin-Moleküle ausgebildet ist.

24. Kaviar oder kaviarähnliches Produkt aus unbefruchteten, reifen Eiern von Wassertieren nach Anspruch 23,
**dadurch gekennzeichnet, dass** bei Fischen die zusätzliche irreversible Vernetzung in einer Zona Radiata Interna (ZRI) und in einer Zona Radiata Externa (ZRE) der Eihülle lokalisiert ist.
